# EUROPÄISCHE PATENTSCHRIFT

(11) **EP 1 432 934 B1**
(45) Veröffentlichungstag und Bekanntmachung des Hinweises auf die Patenterteilung: **11.08.2010**
(21) Anmeldenummer: 02776737.5
(22) Anmeldetag: 27.09.2002
(51) Int. Cl.: F16H 59/02

(54) **SIGNALGEBER ZUM EINSTELLEN DER BETRIEBSZUSTÄNDE EINER SELBSTTÄTIGEN SCHALTVORRICHTUNG**
SIGNAL TRANSMITTER FOR SETTING THE OPERATING STATES OF AN AUTOMATIC SHIFTING DEVICE
EMETTEUR DE SIGNAUX CONCU POUR REGLER LES ETATS DE FONCTIONNEMENT D'UN DISPOSITIF DE COMMUTATION AUTOMATIQUE

(30) Priorität: 05.10.2001 DE 10149264; 16.11.2001 DE 10156091
(43) Veröffentlichungstag der Anmeldung: 30.06.2004
(73) Patentinhaber: ZF Lemförder Metallwaren AG, 49441 Lemförde (DE)
(72) Erfinder: MEYER, Jörg, 49419 Wagenfeld (DE); GIEFER, Andreas, 49448 Lemförde (DE)
(86) Internationale Anmeldenummer: PCT/DE2002/003678
(87) Internationale Veröffentlichungsnummer: WO 2003/031845

(56) Entgegenhaltungen:
- EP-A- 0 582 505
- EP-A- 0 731 294
- EP-A- 0 978 670
- EP-A- 1 045 172
- EP-A- 1 061 290
- WO-A-99/67553
- DE-A- 19 737 296
- FR-A- 2 802 267
- PATENT ABSTRACTS OF JAPAN vol. 2002, no. 02, 2. April 2002 (2002-04-02) -& JP 2001 304396 A (HONDA MOTOR CO LTD), 31. Oktober 2001 (2001-10-31)

## Beschreibung

Die vorliegende Erfindung betrifft einen Signalgeber zum Einstellen der Betriebszustände einer selbsttätigen Schaltvorrichtung eines Gangwechselgetriebes mit einer sich mindestens für bestimmte Schaltpositionen selbständig in eine Grundstellung zurückstellenden Auswahleinrichtung.

Insbesondere im Kraftfahrzeugbau finden Gangwechselgetriebe mit selbsttätiger Schaltvorrichtung in hohem Maße Verwendung. Derartige Schaltvorrichtungen weisen üblicherweise einen Betriebszustand R für das Einlegen des wenigstens einen Rückwärtsganges, einen Betriebszustand N für die Unterbrechung der Drehmomentübertragung im Gangwechselgetriebe und einen Betriebszustand D für das Einlegen eines Vorwärtsganges auf. Häufig ist zusätzlich einen Betriebszustand P für das Einlegen einer Parkbremse vorgesehen.

Ist beispielsweise der Betriebszustand D für das Einlegen eines Vorwärtsganges aktiviert, so wählt die selbsttätige Schaltvorrichtung des Gangwechselgetriebes aus den zur Verfügung stehenden Vorwärtsgängen in Abhängigkeit von bestimmten Fahrzeugparametern wie z. B. der momentanen Geschwindigkeit oder der Beschleunigung automatisch entsprechend einem oder mehreren vorgegebenen Schaltprogrammen den am geeignetsten erscheinenden Vorwärtsgang aus und steuert das Gangwechselgetriebe entsprechend. Häufig sind durch den Fahrer des Fahrzeugs für Sommer und Winter und / oder sportliches Fahren und sparsames Fahren eigene Schaltprogramme auswählbar. Gesteuert werden derartige Schaltvorrichtungen über Signalgeber. Während die Steuerung durch den Signalgeber früher mechanisch über Seilzüge erfolgte, wird heute eine elektronische Übertragung der Signale bevorzugt, da dies eine flexiblere Anordnung des Signalgebers erlaubt. Zur Auswahl des jeweiligen Betriebszustandes R N D P der selbsttätigen Schaltvorrichtung weist ein solcher Signalgeber einen üblicherweise an einer Mittelkonsole des Fahrzeugs vorgesehenen Schalthebel auf. Die den einzelnen Betriebszuständen entsprechenden Funktionen des Schalthebels sind in der Regel in Längsrichtung des Fahrzeugs linear angeordnet und können durch eine Bewegung des Schalthebels in Längsrichtung des Fahrzeugs ausgewählt werden. Bei konventionellen Signalgebern gilt eine Funktion nur so lange als ausgewählt, so lange sich der Schalthebel an der die jeweilige Funktion bezeichnenden Position befindet.

Ein entsprechender Signalgeber ist in der DE 197 37 296 C2 beschrieben. Dieser bekannte Signalgeber weist zudem die Möglichkeit auf, das für das Einlegen der Vorwärtsgänge vorgegebene automatische Schaltprogramm zu verlassen und die Gänge durch Antippen des Schalthebels manuell hinauf und/oder hinunter zu schalten. Dabei wird der jeweilige Schaltvorgang durch Geben eines Impulses ausgelöst, so dass der Schalthebel nicht an der jeweiligen Position zu verharren braucht, sondern selbsttätig in seine Ausgangslage zurückkehren kann.

Dazu ist erforderlich, dass die selbsttätige Schaltvorrichtung des Gangwechselgetriebes in Form eines elektronischen Steuergerätes ausgebildet ist, und der Schalthebel des Signalgebers über zugeordnete elektrische Kontakte ein jeweiliges Steuersignal an das elektronische Steuergerät abgibt.

In den letzten Jahren gibt es zudem Bestrebungen, den an der Mittelkonsole angeordneten Schalthebel des Signalgebers durch einen an der Lenksäule befestigten Wählhebel zu ersetzen, um beispielsweise eine größere Freiheit bei der Innenraumgestaltung des Fahrzeugs zu erlangen.

Ein Signalgeber mit einem solchen Wählhebel ist in der DE 199 16 924 A1 beschrieben. Durch Auslenken des Wählhebels sind die Betriebszustände der selbsttätigen Schaltvorrichtung des automatisch geschalteten Getriebes auswählbar, wobei der Wählhebel längs einer Schaltgasse zum Vorwählen von einzelnen Funktionen R N D P in wenigstens zwei Auslenkrichtungen bewegbar ist und sich aus den beiden Auslenkrichtungen selbsttätig in immer dieselbe Ausgangslage zurückstellt. Jeder Auslenkrichtung des Wählhebels in der Schaltgasse zum Vorwählen von einzelnen Funktionen R N D P im Automatikbetrieb ist jeweils derselbe Betriebszustand der selbsttätigen Schaltvorrichtung des automatisch geschalteten Getriebes zugeordnet, wobei in mindestens einer Auslenkrichtung des Wählhebels zwei verschiedene Funktionen ausgewählt werden können, indem der Wählhebel zum Auswählen einer ersten Funktion eine erste Strecke bis zu einem ersten Anschlag in die Auslenkrichtung bewegt wird und der Wählhebel zum Auswählen einer zweiten Funktion eine zweite größere Strecke bis zu einem zweiten Anschlag in dieselbe Auslenkrichtung bewegt wird, wobei der erste Anschlag überdrückt wird. Die einzelnen Funktionen sind somit entlang einer geradlinigen Bewegungsbahn angeordnet.

Auch hier erfolgt die Steuerung der selbsttätigen Schaltvorrichtung des automatisch geschalteten Getriebes über Impulse, die der Signalgeber entsprechend der Bewegung des Wählhebels abgibt, so dass der Wählhebel nach Auswahl einer Funktion in seine Ausgangslage zurückkehren kann.

Nachteilig an den bekannten Signalgebern zum Einstellen der Betriebszustände einer selbsttätigen Schaltvorrichtung eines Gangwechselgetriebes mit einer sich mindestens für bestimmte Schaltpositionen selbständig in eine Grundstellung zurückstellenden Auswahleinrichtung ist, dass beispielsweise durch unbeabsichtigtes Überreißen einer ersten Position (bzw. der Ausgangslage) der Auswahleinrichtung versehentlich ein nicht beabsichtigter Betriebszustand ausgewählt werden kann.

Weiterhin ist aus der gattungsgemaßen WO 99/67553 A eine Betätigungsvorrichtung mit einem Wählhebel bekannt, der in einem Schaltbild mit einer Vielzahl von Bewegungsbahnen angeordnet ist. Die Bewegungsbahnen sind in häufig und weniger häufig genutzte aufgeteilt. Die häufig genutzten Bewegungsbahnen umfassen häufig genutzte Schaltpositionen, von denen bestimmte Schaltpositionen direkt miteinander über bestimmte Bewegungsbahnen verbunden sind.

Es ist Aufgabe der vorliegenden Erfindung, einen Signalgeber zum Einstellen der Betriebszustände einer selbsttätigen Schaltvorrichtung eines Gangwechselgetriebes zur Verfügung zu stellen, der eine unbeabsichtigte Auswahl eines Betriebszuständes wirkungsvoll vermeidet und dem Fahrer ein intuitives Schalten ermöglicht.

Die Aufgabe wird gemäß dem Hauptanspruch der Erfindung gelöst.

Die Erfindung wird in ihren Unteransprüchen weitergebildet.

Gemäß einem ersten bevorzugten Ausführungsbeispiel der vorliegenden Erfindung weist ein Signalgeber zum Einstellen der Betriebszustände einer selbsttätigen Schaltvorrichtung eines Gangwechselgetriebes eine in wenigstens drei Richtungen auslenkbare, sich mindestens für bestimmte Schaltpositionen selbsttätig in eine Grundstellung zurückstellende Auswahleinrichtung auf, mittels der zumindest eine Schaltposition für das Einlegen eines Rückwärtsganges, eine Schaltposition für die Unterbrechung der Drehmomentübertragung im Gangwechselgetriebe und eine Schaltposition für das Einlegen eines Vorwärtsganges auswählbar ist, wobei die Auswahleinrichtung zum Auswählen der Schaltposition für die Unterbrechung der Drehmomentübertragung im Gangwechselgetriebe ausgehend von der Grundstellung in eine erste Richtung auslenkbar ist und die Auswahleinrichtung zum Auswählen einer der weiteren Schaltpositionen ausgehend von der Schaltposition für die Unterbrechung der Drehmomentübertragung im Gangwechselgetriebe jeweils in eine weitere von der ersten Richtung verschiedene Richtung auslenkbar ist, die keine Gegenrichtung der ersten Richtung ist.

Zum Auswählen der antriebsübertragenden Betriebszustände der selbsttätigen Schaltvorrichtung des Gangwechselgetriebes ist es somit erforderlich, die Auswahleinrichtung aus einer stabilen Grundstellung zunächst durch Auslenken in eine erste Auslenkrichtung in eine instabile Schaltposition für die Unterbrechung der Drehmomentübertragung im Gangwechselgetriebe zu bringen, und anschließend durch Auslenken in eine weitere, von der ersten Auslenkrichtung verschiedenen Richtung in eine weitere instabile Schaltposition (z.B. zum Einlegen eines Vorwärtsganges) zu bringen.

Dabei darf die weitere Auslenkrichtung keine Gegenrichtung zur ersten Auslenkrichtung sein, da sonst wiederum die Grundstellung erreicht würde. Somit muß beim Schalten des erfindungsgemäßen Signalgebers zwischen einzelnen Schaltpositionen immer die Auslenkrichtung der Auswahleinrichtung geändert werden, so dass ein unbeabsichtigtes "Durchschalten" der einzelnen Schaltpositionen wirkungsvoll vermieden und intuitives Schalten möglich wird.

Da die antriebsübertragenden Betriebszustände zudem immer über die Schaltposition für die Unterbrechung der Drehmomentübertragung im Gangwechselgetriebe (Leerlauf) geschaltet werden, wird die Gefahr einer Beschädigung des Gangwechselgetriebes durch Fehlbedienung der Auswahleinrichtung unabhängig von einer ggf. zusätzlich vorhandenen elektronischen Sicherungsschaltung weiter verringert.

Nach dem Auslenken der Auswahleinrichtung kehrt diese selbsttätig in ihre Grundstellung zurück, so dass die Bedienung der Auswahleinrichtung von dem aktivierten Betriebszustand der selbsttätigen Schaltvorrichtung des Gangwechselgetriebes entkoppelt ist.

In einer ersten bevorzugten Ausführungsform ist die Auswahleinrichtung zum Auswählen der Schaltposition für das Einlegen eines Rückwärtsganges ausgehend von der Schaltposition für die Unterbrechung der Drehmomentübertragung im Gangwechselgetriebe in eine zweite Richtung auslenkbar, die keine Gegenrichtung zu der ersten Richtung und von der ersten Richtung verschieden ist, und ist die Auswahleinrichtung zum Auswählen der Schaltposition für das Einlegen eines Vorwärtsganges ausgehend von der Schaltposition für die Unterbrechung der Drehmomentübertragung im Gangwechselgetriebe in eine dritte Richtung auslenkbar, die eine von der ersten und der zweiten Richtung verschiedene Richtung und keine Gegenrichtung zu der ersten Richtung ist.

Dieses Schaltschema erlaubt unter anderem eine lineare Anordnung der Schaltpositionen für das Einlegen eines Rückwärtsganges, für die Unterbrechung der Drehmomentübertragung im Gangwechselgetriebe und für das Einlegen eines Vorwärtsganges und somit einen platzsparenden Aufbau der Auswahleinrichtung des Signalgebers.

Vorzugsweise ist der Signalgeber so ausgebildet, dass mittels der Auswahleinrichtung zusätzlich zum Einstellen der Betriebszustände der selbsttätigen Schaltvorrichtung des Gangwechselgetriebes weitere Vorrichtungen steuerbar sind.

Dadurch ist es erfindungsgemäß möglich, die Auswahleinrichtung des Signalgebers als Multifunktionsschaltelement auszuführen und zusätzlich beispielsweise Einstellungen einer Fahrwerksregelung, einer Klimaanlage, eines Navigationssystems oder Radios vorzunehmen. Hierdurch kann die Anzahl der für die Bedienung der jeweiligen Vorrichtungen benötigten Auswahleinrichtungen reduziert werden.

Erfindungsgemäß ist es besonders vorteilhaft, wenn mittels der Auswahleinrichtung zusätzlich eine Schaltposition für eine erste zusätzliche Funktion und eine Schaltposition für eine zweite zusätzliche Funktion auswählbar ist, wobei die Auswahleinrichtung zum Auswählen der Schaltposition für eine erste zusätzliche Funktion ausgehend von der Grundstellung in eine Richtung auslenkbar ist, die gleich der zweiten Richtung ist, und die Auswahleinrichtung zum Auswählen der Schaltposition für eine zweite zusätzliche Funktion ausgehend von der Grundstellung in eine Richtung auslenkbar ist, die gleich der dritten Richtung ist.

Dies erlaubt eine direkte Steuerung der weiteren Vorrichtungen eines Fahrzeugs, wobei ein unbeabsichtigtes Auswählen der Betriebszustände der selbsttätigen Schaltvorrichtung des Gangwechselgetriebes weiterhin verhindert wird.

Gemäß einer zweiten bevorzugten Ausführungsform sind eine erste und eine zweite Schaltposition für die Unterbrechung der Drehmomentübertragung im Gangwechselgetriebe vorgesehen, wobei die Auswahleinrichtung zum Auswählen der - ersten oder-der zweiten Schaltposition für die Unterbrechung der Drehmomentübertragung im Gangwechselgetriebe ausgehend von der Grundstellung in eine erste und zweite Richtung auslenkbar ist, wobei die erste Richtung ungleich der zweiten Richtung ist, und ist die Auswahleinrichtung zum Auswählen der Schaltposition für das Einlegen eines Rückwärtsganges ausgehend von der ersten Schaltposition für die Unterbrechung der Drehmomentübertragung im Gangwechselgetriebe in eine dritte Richtung auslenkbar, die verschieden von der ersten und zweiten Richtung und keine Gegenrichtung zu der ersten und zweiten Richtung ist, und ist die Auswahleinrichtung zum Auswählen der Schaltposition für das Einlegen eines Vorwärtsganges ausgehend von der zweiten Schaltposition für die Unterbrechung der Drehmomentübertragung im Gangwechselgetriebe in eine Richtung auslenkbar, die gleich der dritten Richtung ist.

Durch das Vorsehen von zwei Schaltpositionen für die Unterbrechung der Drehmomentübertragung im Gangwechselgetriebe ist es möglich, die Anzahl der mit dem erfindungsgemäßen Signalgeber realisierbaren Schaltbilder erheblich zu erhöhen. Weiter kann das Risiko von Fehlbedienungen weiter reduziert werden, da ein Benutzer bereits vor der Auswahl einer Schaltposition für die Unterbrechung der Drehmomentübertragung im Gangwechselgetriebe entscheiden muß, ob er eine Schaltposition zum Einlegen einer Vorwärts oder Rückwärtsganges erreichen möchte.

Besonders vorteilhaft ist es, wenn mittels der Auswahlrichtung zusätzlich eine Schaltposition für das Einlegen einer Parkbremse auswählbar ist, da so mittels der Auswahleinrichtungen alle typischen Betriebszustände einer selbsttätigen Schaltvorrichtung eines Gangwechselgetriebes ausgewählt werden können.

Vorzugsweise ist die Auswahleinrichtung zum Auswählen der Schaltposition für das Einlegen einer Parkbremse ausgehend von der Schaltposition für das Einlegen eines Rückwärtsganges in eine Richtung auslenkbar, die gleich der ersten Richtung ist.

Dadurch ist es zum einen gewährleistet, dass zum Einlegen einer Parkbremse ausgehend vom der Schaltposition für das Einlegen des Rückwärtsganges eine weitere Änderung der Auslenkrichtung der Auswahleinrichtung erforderlich ist, wodurch ein unbeabsichtigtes Einlegen der Parkbremse vermieden werden kann. Zum anderen ist es so möglich, die bei traditionellen Auswahleinrichtungen für den Betriebszustand eines Automatikgetriebes gebräuchliche Reihenfolge der Schaltpositionen, bei der die Schaltposition für das Einlegen einer Parkbremse und die Schaltposition für das Einlegen eines Rückwärtsganges benachbart sind, beizubehalten.

Alternativ kann die Auswahleinrichtung zum Auswählen der Schaltposition für das Einlegen einer Parkbremse ausgehend von der Grundstellung in einer Richtung auslenkbar sein, die gleich der dritten Richtung ist.

Dies erlaubt ein direktes Einlegen der Parkbremse ausgehend von der Grundeinstellung.

Gemäß einem zweiten bevorzugten Ausführungsbeispiel ist die Auswahleinrichtung in vier Richtungen auslenkbar.

Dies erlaubt eine weitere Erhöhung der Zahl der mit dem erfindungsgemäßen Signalgeber realisierbaren Schaltbilder der Auswahleinrichtung.

In diesem zweiten Ausführungsbeispiel ist die Auswahleinrichtung zum Auswählen der Schaltposition für das Einlegen einer Parkbremse vorzugsweise ausgehend von der Grundstellung in eine vierte Richtung auslenkbar, die verschieden von der im vorangegangenen beschriebenen ersten, zweiten und dritten Richtung ist.

Somit ist es wiederum möglich, die Schaltposition für das Einlegen einer Parkbremse ausgehend von der Grundstellung direkt zu erreichen.

Gemäß einer bevorzugten Ausführungsform des zweiten Ausführungsbeispiels sind eine erste und eine zweite Schaltposition für die Unterbrechung der Drehmomentübertragung im Gangwechselgetriebe vorgesehen, wobei die Auswahleinrichtung zum Auswählen der ersten oder der zweiten Schaltposition für die Unterbrechung der Drehmomentübertragung im Gangwechselgetriebe ausgehend von der Grundstellung in eine erste oder zweite Richtung auslenkbar ist, wobei die erste Richtung-ungleich der zweiten Richtung ist, und ist die Auswahleinrichtung zum Auswählen der Schaltposition für das Einlegen eines Rückwärtsganges ausgehend von der ersten Schaltposition für die Unterbrechung der Drehmomentübertragung im Gangwechselgetriebe in eine dritte Richtung auslenkbar, die verschieden von der ersten und zweiten Richtung und keine Gegenrichtung zu der ersten und zweiten Richtung ist, und ist die Auswahleinrichtung zum Auswählen der Schaltposition für das Einlegen eines Vorwärtsganges ausgehend von der zweiten Schaltposition für die Unterbrechung der Drehmomentübertragung im Gangwechselgetriebe in eine vierte Richtung auslenkbar, die verschieden von der ersten,

zweiten und dritten Richtung und keine Gegenrichtung zur ersten und zweiten Richtung ist.

Auf diese Weise lassen sich Schaltungsanordnungen realisieren, bei denen die Schaltposition für das Einlegen eines Rückwärtsganges und die Schaltposition für das Einlegen eines Vorwärtsganges in Bezug auf die Grundstellung der Auswahleinrichtung punktsymmetrisch angeordnet sind und sich somit gegenüber liegen, wodurch eine intuitive Bedienung der Auswahleinrichtung des erfindungsgemäßen Signalgebers zusätzlich erleichtert wird.

Vorzugsweise ist auch gemäß dem zweiten Ausführungsbeispiel eine Schaltposition für das Einlegen einer Parkbremse auswählbar, wobei zum Auswählen der Schaltposition für das Einlegen einer Parkbremse die Auswahleinrichtung ausgehend von der Schaltposition für das Einlegen eines Rückwärtsganges in eine Richtung auslenkbar ist, die gleich der vorgenannten ersten oder zweiten Richtung ist.

Weiter ist es auch gemäß dem zweiten Ausführungsbeispiel besonders vorteilhaft, wenn mittels der Auswahleinrichtung zusätzlich eine Schaltposition für eine erste zusätzliche Funktion und eine Schaltposition für eine zweite zusätzliche Funktion auswählbar ist, und die Auswahleinrichtung zum Auswählen der Schaltposition für eine erste zusätzliche Funktion ausgehend von der Grundstellung in eine Richtung auslenkbar ist, die gleich der dritten Richtung ist, und die Auswahleinrichtung zum Auswählen der Schaltposition für eine zweite zusätzliche Funktion ausgehend von der Grundstellung in eine Richtung auslenkbar ist, die gleich der vierten Richtung ist, so dass mittels der Auswahleinrichtung des erfindungsgemäßen Signalgebers zusätzliche Vorrichtungen steuerbar sind.

In einer alternativen Ausführungsform weist der erfindungsgemäße Signalgeber zusätzlich eine Parktaste auf, wobei durch Drücken der Parktaste eine Parkbremse einlegbar ist.

Durch das Vorsehen einer Parktaste ist es nicht nötig, eine eigene Schaltposition für das Einlegen der Parkbremse für die Auswahleinrichtung auszubilden, wodurch das Schaltbild der Auswahleinrichtung vereinfacht werden kann. Weiter kann durch das Vorsehen einer separaten Parktaste das versehentliche Einlegen der Parkbremse verhindert werden. Vorzugsweise ist die Parktaste an der Auswahleinrichtung angeordnet.

Um das versehentliche Einlegen der Schaltposition für das Einlegen eines Rückwärtsganges beim Auslenken der Auswahleinrichtung weiter zu verhindern, ist es von Vorteil, wenn der Signalgeber zusätzlich eine Rückfahr-Sperrtaste aufweist und die Auswahleinrichtung zum Auswählen der Schaltposition für das Einlegen eines Rückwärtsganges nur bei gedrückter Rückfahr-Sperrtaste auslenkbar ist.

Dabei ist die Rückfahr-Sperrtaste vorzugsweise an der Auswahleinrichtung angeordnet.

Bevorzugt ist der erfindungsgemäße Signalgeber in einem Fahrzeug montiert.

Dabei ist es von Vorteil, wenn die Schaltposition für das Einlegen eines Rückwärtsganges in Bezug auf die Grundstellung der Auswahleinrichtung in Vorwärtsfahrtrichtung des Fahrzeuges angeordnet ist, und die Schaltposition für das Einlegen eines Vorwärtsganges in Bezug auf die Grundstellung der Auswahleinrichtung in Rückwärtsfahrtrichtung des Fahrzeugs angeordnet ist, da dies der konventionellen Anordnung der entsprechenden Schaltpositionen bei einem konventionellen Schalthebel eines Automatikgetriebes entspricht.

Selbstverständlich ist es gemäß der vorliegenden Erfindung auch möglich, diese Anordnung zu vertauschen, so dass die Schaltposition für das Einlegen eines Rückwärtsganges in Bezug auf die Grundstellung der Auswahleinrichtung in Rückwärtsfahrtrichtung des Fahrzeuges angeordnet ist, und die Schaltposition für das Einlegen eines Vorwärtsganges in Bezug auf die Grundstellung der Auswahleinrichtung in Vorwärtsfahrtrichtung des Fahrzeuges angeordnet ist, wie es der tatsächlichen Funktionsweise der jeweiligen Schaltposition besser gerecht wird.

Vorzugsweise ist die Auswahleinrichtung in Form eines an einer Lenksäule eines Fahrzeugs befestigten Lenkstockhebels ausgeführt, da dies eine Bedienung der Auswahleinrichtung erlaubt, ohne dass ein Fahrer die Hände vom Lenkrad nehmen muß.

Alternativ ist es auch möglich, die Auswahleinrichtung in Form eines an der Mittelkonsole des Fahrzeugs angeordneten Schalthebels auszuführen.

Gemäß einem bevorzugten Ausführungsbeispiel der vorliegenden Erfindung weist ein Signalgeber zum Einstellen der Betriebszustände einer selbsttätigen Schaltvorrichtung eines Gangwechselgetriebes eine in wenigstens drei Richtungen auslenkbare, sich mindestens für bestimmte Schaltpositionen selbsttätig in eine Grundstellung zurückstellende Auswahleinrichtung auf, mittels der zumindest eine Schaltposition für das Einlegen eines Rückwärtsganges, eine Schaltposition für die Unterbrechung der Drehmomentübertragung im Gangwechselgetriebe und eine Schaltposition für das Einlegen eines Vorwärtsganges auswählbar ist, wobei die Auswahleinrichtung zum Auswählen der Schaltposition für die Unterbrechung der Drehmomentübertragung im Gangwechselgetriebe ausgehend von der Grundstellung in eine erste Richtung auslenkbar ist und die Auswahleinrichtung zum Auswählen einer der weiteren Schaltpositionen ausgehend von der Schaltposition für die Unterbrechung der Drehmomentübertragung im Gangwechselgetriebe zunächst jeweils in eine weitere von der ersten Richtung verschiedene Richtung auslenkbar ist, die keine Gegenrichtung der ersten Richtung ist, und nach Auslenkung in die jeweils weitere Richtung wieder in die erste Richtung auslenkbar ist.

Zum Auswählen der antriebsübertragenden Betriebszustände der selbsttätigen Schaltvorrichtung des Gangwechselgetriebes ist es somit erforderlich, die Auswahleinrichtung aus einer stabilen Grundstellung zunächst durch Auslenken in eine erste Auslenkrichtung in eine instabile Schaltposition für die Unterbrechung der Drehmomentübertragung im Gangwechselgetriebe zu bringen, und anschließend zunächst durch Auslenken in eine weitere, von der ersten Auslenkrichtung verschiedene Richtung und anschließend durch Auslenken in die erste Richtung in eine weitere instabile Schaltposition (z.B. zum Einlegen eines Vorwärtsganges) zu bringen. Dabei darf die weitere Auslenkrichtung keine Gegenrichtung zur ersten Auslenkrichtung sein, da sonst wiederum die Grundstellung erreicht würde.

Somit muss bei einer Auslenkung der Auswahleinrichtung zwischen einzelnen Schaltpositionen zunächst immer die Auslenkrichtung der Auswahleinrichtung geändert werden, so dass ein Schalten des erfindungsgemäßen Signalgebers durch eine im wesentlichen stufenförmige Auslenkbewegung der Auswahleinrichtung zwischen zwei aufeinanderfolgenden Schaltpositionen erfolgt. Weiter ist die grundsätzliche Auslenkrichtung der Auswahleinrichtung zur Auswahl benachbart angeordneter Schaltpositionen vorzugsweise gleich. Folglich ist es mit dem erfindungsgemäßen Signalgeber möglich, die Auswahleinrichtung immer bis zu einem Anschlag einer Schaltposition auszulenken, so dass ein unbeabsichtigtes "Durchschalten" der einzelnen Schaltpositionen wirkungsvoll vermieden und intuitives Schalten möglich wird.

Da die antriebsübertragenden Betriebszustände zudem immer über die Schaltposition für die Unterbrechung der Drehmomentübertragung im Gangwechselgetriebe (Leerlauf) geschaltet werden, wird die Gefahr einer Beschädigung des Gangwechselgetriebes durch Fehlbedienung der Auswahleinrichtung unabhängig von einer ggf. zusätzlich vorhandenen elektronischen Sicherungsschaltung weiter verringert.

Nach dem Auslenken der Auswahleinrichtung kehrt diese selbsttätig in ihre Grundstellung zurück, so dass die Bedienung der Auswahleinrichtung von dem aktivierten Betriebszustand der selbsttätigen Schaltvorrichtung des Gangwechselgetriebes entkoppelt ist.

In einer ersten bevorzugten Ausführungsform ist die Auswahleinrichtung zum Auswählen der Schaltposition für das Einlegen eines Rückwärtsganges ausgehend von der Schaltposition für die Unterbrechung der Drehmomentübertragung im Gangwechselgetriebe zunächst in eine zweite Richtung auslenkbar, die keine Gegenrichtung zu der ersten Richtung und von der ersten Richtung verschieden ist, und nach Auslenkung in die zweite Richtung wieder in die erste Richtung auslenkbar, und ist die Auswahleinrichtung ferner zum Auswählen der Schaltposition für das Einlegen eines Vorwärtsganges ausgehend von der Schaltposition für die Unterbrechung der Drehmomentübertragung im Gangwechselgetriebe zunächst in eine dritte Richtung auslenkbar, die eine von der ersten und der zweiten Richtung verschiedene Richtung und keine Gegenrichtung zu der ersten Richtung ist, und nach Auslenkung in die dritte Richtung wieder in die erste Richtung auslenkbar.

Dieses Schaltschema erlaubt unter anderem einen platzsparenden Aufbau der Auswahleinrichtung des Signalgebers.

Vorzugsweise ist der Signalgeber so ausgebildet, dass mittels der Auswahleinrichtung zusätzlich zum Einstellen der Betriebszustände der selbsttätigen Schaltvorrichtung des Gangwechselgetriebes weitere Vorrichtungen steuerbar sind.

Dadurch ist es erfindungsgemäß möglich, die Auswahleinrichtung des Signalgebers als Multifunktionsschaltelement auszuführen und zusätzlich beispielsweise Einstellungen einer Fahrwerksregelung, einer Klimaanlage, eines Navigationssystems oder Radios vorzunehmen. Hierdurch kann die Anzahl der für die Bedienung der jeweiligen Vorrichtungen benötigten Auswahleinrichtungen reduziert werden.

Erfindungsgemäß ist es besonders vorteilhaft, wenn mittels der Auswahleinrichtung zusätzlich eine Schaltposition für eine erste zusätzliche Funktion und eine Schaltposition für eine zweite zusätzliche Funktion auswählbar ist, wobei die Auswahleinrichtung zum Auswählen der Schaltposition für eine erste zusätzliche Funktion ausgehend von der Grundstellung in eine Richtung auslenkbar ist, die gleich der zweiten Richtung ist, und die Auswahleinrichtung zum Auswählen der Schaltposition für eine zweite zusätzliche Funktion ausgehend von der Grundstellung in eine Richtung auslenkbar ist, die gleich der dritten Richtung ist.

Dies erlaubt eine direkte Steuerung der weiteren Vorrichtungen eines Fahrzeugs, wobei ein unbeabsichtigtes Auswählen der Betriebszustände der selbsttätigen Schaltvorrichtung des Gangwechselgetriebes weiterhin verhindert wird.

Gemäß einer zweiten bevorzugten Ausführungsform sind eine erste und eine zweite Schaltposition für die Unterbrechung der Drehmomentübertragung im Gangwechselgetriebe vorgesehen, wobei die Auswahleinrichtung zum Auswählen der ersten oder der zweiten Schaltposition für die Unterbrechung der Drehmomentübertragung im Gangwechselgetriebe ausgehend von der Grundstellung in eine erste und zweite Richtung auslenkbar ist, wobei die erste Richtung ungleich der zweiten Richtung ist, und

ist die Auswahleinrichtung zum Auswählen der Schaltposition für das Einlegen eines Rückwärtsganges ausgehend von der ersten Schaltposition für die Unterbrechung der Drehmomentübertragung im Gangwechselgetriebe zunächst in eine dritte Richtung auslenkbar, die verschieden von der ersten und zweiten Richtung und keine Gegenrichtung zu der ersten und zweiten Richtung ist, und nach Auslenkung in die dritte Richtung wieder in die erste oder zweite Richtung auslenkbar, und ist die Auswahleinrichtung zum Auswählen der Schaltposition für das Einlegen eines Vorwärtsganges ausgehend von der zweiten Schaltposition für die Unterbrechung der Drehmomentübertragung im Gangwechselgetriebe zunächst in eine Richtung auslenkbar, die gleich der dritten Richtung ist, und nach Auslenkung in die dritte Richtung wieder in die erste oder zweite Richtung auslenkbar.

Durch das Vorsehen von zwei Schaltpositionen für die Unterbrechung der Drehmomentübertragung im Gangwechselgetriebe ist es möglich, die Anzahl der mit dem erfindungsgemäßen Signalgeber realisierbaren Schaltbilder erheblich zu erhöhen. Weiter kann das Risiko von Fehlbedienungen weiter reduziert werden, da ein Benutzer bereits vor der Auswahl der ersten bzw. zweiten Schaltposition für die Unterbrechung der Drehmomentübertragung im Gangwechselgetriebe entscheiden muss, ob er eine Schaltposition zum Einlegen einer Vorwärts oder Rückwärtsganges erreichen möchte.

Besonders vorteilhaft ist es, wenn mittels der Auswahlrichtung zusätzlich eine Schaltposition für das Einlegen einer Parkbremse auswählbar ist, da so mittels der Auswahleinrichtungen alle typischen Betriebszustände einer selbsttätigen Schaltvorrichtung eines Gangwechselgetriebes ausgewählt werden können.

Vorzugsweise ist die Auswahleinrichtung zum Auswählen der Schaltposition für das Einlegen einer Parkbremse ausgehend von der Schaltposition für das Einlegen eines Rückwärtsganges zunächst in die jeweils weitere Richtung auslenkbar, und nach Auslenkung in die jeweils weitere Richtung in eine Richtung auslenkbar, die gleich der ersten Richtung oder einer Gegenrichtung zur ersten Richtung ist.

Dadurch ist es zum einen gewährleistet, dass zum Einlegen einer Parkbremse ausgehend vom der Schaltposition für das Einlegen des Rückwärtsganges bei Beibehaltung der grundsätzlichen Auslenkrichtung der Auswahleinrichtung zunächst eine Änderung der Auslenkrichtung der Auswahleinrichtung erforderlich ist, wodurch ein unbeabsichtigtes Einlegen der Parkbremse vermieden werden kann. Zum anderen ist es so möglich, die bei traditionellen Auswahleinrichtungen für den Betriebszustand eines Automatikgetriebes gebräuchliche Reihenfolge der Schaltpositionen, bei der die Schaltposition für das Einlegen einer Parkbremse und die Schaltposition für das Einlegen eines Rückwärtsganges benachbart sind, beizubehalten.

Gemäß einem zweiten bevorzugten Ausführungsbeispiel ist die Auswahleinrichtung in vier Richtungen auslenkbar.

Dies erlaubt eine weitere Erhöhung der Zahl der mit dem erfindungsgemäßen Signalgeber realisierbaren Schaltbilder der Auswahleinrichtung.

Gemäß einer bevorzugten Ausführungsform des zweiten Ausführungsbeispiels sind eine erste und eine zweite Schaltposition für die Unterbrechung der Drehmomentübertragung im Gangwechselgetriebe vorgesehen, wobei die Auswahleinrichtung zum Auswählen der ersten oder der zweiten Schaltposition für die Unterbrechung der Drehmomentübertragung im Gangwechselgetriebe ausgehend von der Grundstellung in eine erste oder zweite Richtung auslenkbar ist, wobei die erste Richtung ungleich der zweiten Richtung ist, und ist die Auswahleinrichtung zum Auswählen der Schaltposition für das Einlegen eines Rückwärtsganges ausgehend von der ersten Schaltposition für die Unterbrechung der Drehmomentübertragung im Gangwechselgetriebe zunächst in eine dritte Richtung auslenkbar, die verschieden von der ersten und zweiten Richtung und keine Gegenrichtung zu der ersten und zweiten Richtung ist, und nach Auslenkung in die dritte Richtung wieder in die erste oder zweite Richtung auslenkbar, und ist die Auswahleinrichtung zum Auswählen der Schaltposition für das Einlegen eines Vorwärtsganges ausgehend von der zweiten Schaltposition für die Unterbrechung der Drehmomentübertragung im Gangwechselgetriebe zunächst in eine vierte Richtung auslenkbar, die verschieden von der ersten, zweiten und dritten Richtung und keine Gegenrichtung zur ersten und zweiten Richtung ist, und nach Auslenkung in die vierte Richtung wieder in die erste oder zweite Richtung auslenkbar.

Auf diese Weise lassen sich Schaltungsanordnungen realisieren, bei denen die Schaltposition für das Einlegen eines Rückwärtsganges und die Schaltposition für das Einlegen eines Vorwärtsganges in Bezug auf die Grundstellung der Auswahleinrichtung punktsymmetrisch angeordnet sind und sich somit gegenüber liegen, wodurch eine intuitive Bedienung der Auswahleinrichtung des erfindungsgemäßen Signalgebers zusätzlich erleichtert wird.

Vorzugsweise ist auch gemäß dem zweiten Ausführungsbeispiel eine Schaltposition für das Einlegen einer Parkbremse auswählbar, wobei zum Auswählen der Schaltposition für das Einlegen einer Parkbremse die Auswahleinrichtung ausgehend von der Schaltposition für das Einlegen eines Rückwärtsganges zunächst in die dritte oder vierte Richtung auslenkbar ist, und nach Auslenkung in die dritte oder vierte Richtung in eine Richtung auslenkbar ist, die gleich der ersten oder zweiten Richtung ist.

Weiter ist es auch gemäß dem zweiten Ausführungsbeispiel besonders vorteilhaft, wenn mittels der Auswahleinrichtung zusätzlich eine Schaltposition für eine erste zusätzliche Funktion und eine Schaltposition für eine zweite zusätzliche Funktion auswählbar ist, und die Auswahleinrichtung zum Auswählen der Schaltposition für eine erste zusätzliche Funktion ausgehend von der Grundstellung in eine Richtung auslenkbar ist, die gleich der dritten Richtung ist, und die Auswahleinrichtung zum Auswählen der Schaltposition für eine zweite zusätzliche Funktion ausgehend von der Grundstellung in eine Richtung auslenkbar ist, die gleich der vierten Richtung ist, so dass mittels der Auswahleinrichtung des erfindungsgemäßen Signalgebers zusätzliche Vorrichtungen steuerbar sind.

Die vorliegende Erfindung wird im Folgenden anhand von Figuren näher erläutert. Dabei zeigt
- Figur 1: ein Schaltbild einer in drei Richtungen auslenkbaren Auswahleinrichtung eines erfindungsgemäßen Signalgebers;
- Figur 2: ein Schaltbild der Auswahleinrichtung eines erfindungsgemäßen Signalgebers, der die Steuerung weiterer Vorrichtungen erlaubt;
- Figur 3: ein Schaltbild einer in drei Richtungen auslenkbaren Auswahleinrichtung eines erfindungsgemäßen Signalgebers, bei dem eine erste und eine zweite Schaltposition für die Unterbrechung der Drehmomentübertragung im Gangwechselgetriebe vorgesehen ist;
- Figur 4: ein Schaltbild einer in drei Richtungen auslenkbaren Auswahleinrichtung eines erfindungsgemäßen Signalgebers, der zusätzlich eine Schaltposition für das Einlegen einer Parkbremse aufweist;
- Figur 5: ein Schaltbild einer in drei Richtungen auslenkbaren Auswahleinrichtung eines erfindungsgemäßen Signalgebers, bei dem eine erste und eine zweite Schaltposition für die Unterbrechung der Drehmomentübertragung im Gangwechselgetriebe vorgesehen ist, und der zusätzlich eine Schaltposition für das Einlegen einer Parkbremse aufweist;
- Figur 6: eine alternative Ausführungsform zu dem in Figur 5 gezeigten Schaltbild;
- Figur 7: eine alternative Ausführungsform zu dem in Figur 4 gezeigten Schaltbild unter Verwendung einer in vier Richtungen auslenkbaren Auswahleinrichtung eines erfindungsgemäßen Signalgebers ;
- Figur 8: eine alternative Ausführungsform zu dem in Figur 6 gezeigten Schaltbild unter Verwendung einer in vier Richtungen auslenkbaren Auswahleinrichtung eines erfindungsgemäßen Signalgebers ;
- Figuren 9, 10: alternative Ausführungsformen zu dem in Figur 5 gezeigten Schaltbild unter Verwendung einer in vier Richtungen auslenkbaren Auswahleinrichtung eines erfindungsgemäßen Signalgebers ;
- Figuren 11, 12, 13, 14: alternative Ausführungsformen zu dem in Figur 3 gezeigten Schaltbild unter Verwendung einer in vier Richtungen auslenkbaren Auswahleinrichtung eines erfindungsgemäßen Signalgebers;
- Figur 15: ein Schaltbild einer in vier Richtungen auslenkbaren Auswahleinrichtung eines erfindungsgemäßen Signalgebers, bei dem eine erste und eine zweite Schaltposition für die Unterbrechung der Drehmomentübertragung im Gangwechselgetriebe vorgesehen ist, wobei der Signalgeber die Steuerung weiterer Vorrichtungen erlaubt, und zusätzlich eine Schaltposition für das Einlegen einer Parkbremse aufweist;
- Figur 16: einen Lenkstockhebel, wie er als Auswahleinrichtung des erfindungsgemäßen Signalgebers verwendet werden kann;
- Figur 17: ein Schaltbild einer in drei Richtungen auslenkbaren Auswahleinrichtung eines erfindungsgemäßen Signalgebers;
- Figur 18: ein Schaltbild der Auswahleinrichtung eines erfindungsgemäßen Signalgebers, der die Steuerung weiterer Vorrichtungen erlaubt;
- Figur 19: ein Schaltbild einer in drei Richtungen auslenkbaren Auswahleinrichtung eines erfindungsgemäßen Signalgebers, bei dem eine erste und eine zweite Schaltposition für die Unterbrechung der Drehmomentübertragung im Gangwechselgetriebe vorgesehen ist;
- Figur 20: ein Schaltbild einer in drei Richtungen auslenkbaren Auswahleinrichtung eines erfindungsgemäßen Signalgebers, der zusätzlich eine Schaltposition für das Einlegen einer Parkbremse aufweist;
- Figur 21: ein Schaltbild einer in drei Richtungen auslenkbaren Auswahleinrichtung eines erfindungsgemäßen Signalgebers, bei dem eine erste und eine zweite Schaltposition für die Unterbrechung der Drehmomentübertragung im Gangwechselgetriebe vorgesehen ist, und der zusätzlich eine Schaltposition für das Einlegen einer Parkbremse aufweist;
- Figur 22: eine alternative Ausführungsform zu dem in Figur 21 gezeigten Schaltbild;
- Figur 23: eine alternative Ausführungsform zu dem in Figur 20 gezeigten Schaltbild unter Verwendung einer in vier Richtungen auslenkbaren Auswahleinrichtung eines erfindungsgemäßen Signalgebers ;
- Figur 24: eine alternative Ausführungsform zu dem in Figur 22 gezeigten Schaltbild unter Verwendung einer in vier Richtungen auslenkbaren Auswahleinrichtung eines erfindungsgemäßen Signalgebers ;
- Figuren 25, 26: alternative Ausführungsformen zu dem in Figur 21 gezeigten Schaltbild unter Verwendung einer in vier Richtungen auslenkbaren Auswahleinrichtung eines erfindungsgemäßen Signalgebers ;
- Figuren 27- 30: alternative Ausführungsformen zu dem in Figur 19 gezeigten Schaltbild unter Verwendung einer in vier Richtungen auslenkbaren Auswahleinrichtung eines erfindungsgemäßen Signalgebers; und
- Figur 31: ein Schaltbild einer in vier Richtungen auslenkbaren Auswahleinrichtung eines erfindungsgemäßen Signalgebers, bei dem eine erste und eine zweite Schaltposition für die Unterbrechung der Drehmomentübertra- gung im Gangwechselgetriebe vorgesehen ist, wobei der Signalgeber die Steuerung weiterer Vorrichtungen erlaubt, und zusätzlich eine Schaltposition für das Einlegen einer Parkbremse aufweist.

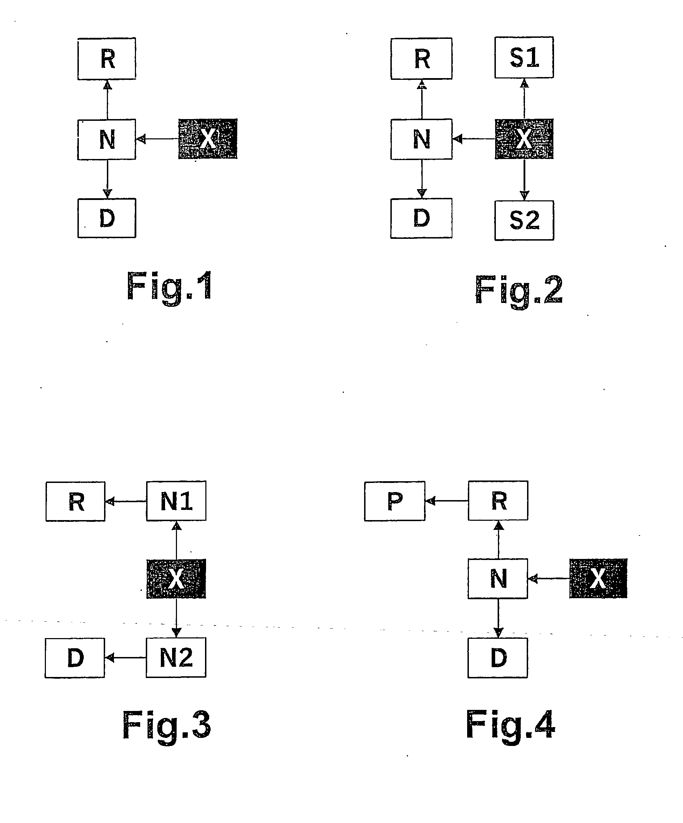

In den Figuren 1-15 ist eine Auswahl verschiedener Schaltbilder gezeigt, wie sie mit dem erfindungsgemäßen Signalgeber realisiert werden können.

Dabei bezeichnen die weiß hinterlegten Felder instabile Positionen der Auswahleinrichtung, d. h. Positionen, an denen die Auswahlrichtung nur so lange verweilt, so lange sie dort gehalten wird. Die weiß hinterlegten Felder sind mit den Buchstaben R, N, N1, N2, D, P, S1, S2 bezeichnet. R steht dabei für eine Schaltposition für das Einlegen eines Rückwärtsganges, N, N1, N2 für Schaltpositionen für die Unterbrechung der Drehmomentübertragung im Gangwechselgetriebe, D für eine Schaltposition für das Einlegen eines Vorwärtsganges, P für eine Schaltposition für das Einlegen einer Parkbremse und S1, S2 für Schaltpositionen für erste und zweite zusätzliche Funktionen. Die schwarz hinterlegten und mit X bezeichneten Felder symbolisieren die jeweilige stabile Grundstellung der Auswahleinrichtung, d. h. die jeweilige Position in einem Schaltbild, an der die Auswahleinrichtung verharrt, wenn sie nicht ausgelenkt wird, bzw. zu der die Auswahleinrichtung zurückkehrt, nachdem sie in eine instabile Position ausgelenkt worden ist.

Die Pfeile in den Figuren 1-15 geben die Richtungen an, in die die Auswahleinrichtung ausgehend von einer jeweiligen Position auslenkbar ist.

Die Figuren 1-6 zeigen Schaltbilder, wie sie mit einem Signalgeber realisiert werden können, dessen Auswahleinrichtung in nur drei Richtungen auslenkbar ist. Besonders vorteilhaft an Signalgebern mit in drei Richtungen auslenkbaren Auswahleinrichtung ist neben dem einfachen Aufbau der Auswahleinrichtung der geringe Platzbedarf der realisierbaren Schaltbilder.

Figur 1 zeigt ein mögliches Schaltbild gemäß einer ersten bevorzugten Ausführungsform eines erfindungsgemäßen Signalgebers, bei dem die Auswahleinrichtung zum Auswählen der Schaltposition N für die Unterbrechung der Drehmomentübertragung im Gangwechselgetriebe ausgehend von der Grundstellung X in eine erst Richtung auslenkbar ist, und zum Auswählen der Schaltposition R für das Einlegen eines Rückwärtsganges ausgehend von der Schaltposition N in eine zweite Richtung auslenkbar ist, wobei die zweite Richtung keine Gegenrichtung zur ersten Richtung und von der ersten Richtung verschieden ist. Bei der in Figur 1 gezeigten ersten Richtung kann es sich beispielsweise um eine Richtung hin zu einem Bediener der Auswahleinrichtung (Fahrerseite), und bei der zweiten Richtung um eine Vorwärtsfahrtrichtung eines Fahrzeugs, in dem der erfindungsgemäße Signalgeber montiert ist, handeln.

Zum Auswählen der Schaltposition D für das Einlegen eines Vorwärtsganges ist die Auswahleinrichtung ausgehend von der Schaltposition N in eine dritte Richtung auslenkbar, die eine von der ersten der zweiten Richtung verschiedene Richtung und keine Gegenrichtung zur ersten Richtung ist. In dem in Figur 1 gezeigtem Schaltbild handelt es sich bei der dritten Richtung um die Gegenrichtung der zweiten Richtung und somit um eine in Rückwärtsfahrtrichtung des Fahrzeugs orientierte Richtung.

Eine besonders bevorzugte Ausführungsform des in Figur 1 gezeigten Schaltbildes ist in Figur 2 dargestellt.

Figur 2 unterscheidet sich von Figur 1 dadurch, dass mittels der Auswahleinrichtung des erfindungsgemäßen Signalgebers zusätzlich zur Einstellung der Betriebszustände der selbsttätigen Schaltvorrichtung des Gangwechselgetriebes weitere Vorrichtungen steuerbar bzw. weitere Funktionen auswählbar sind. Dazu sind mittels der Auswahleinrichtung zusätzlich eine erste Schaltposition S1 für eine erste zusätzliche Funktion und eine zweite Schaltposition S2 für eine zweite zusätzliche Funktion auswählbar, wobei die Auswahleinrichtung zum Auswählen der Schaltposition S1 ausgehend von der Grundstellung X in eine Richtung auslenkbar ist, die gleich der zweiten Richtung von Figur 1 und somit gleich der Vorwärtsfahrtrichtung des Fahrzeugs ist. Zum Auswählen der Schaltposition S2 ist die Auswahleinrichtung ausgehend von der Grundstellung X in eine Richtung auslenkbar, die gleich der dritten Richtung von Figur 1 und somit gleich der Rückwärtsfahrtrichtung ist.

Die Schaltpositionen S1 und S2 können beispielsweise zum manuellen Schalten des Gangwechselgetriebes, aber auch zur Bedienung eines Navigationssystems, einer Fahrwerksregelung, einer Klimaanlage oder Steuerung einer sonstigen Vorrichtung verwendet werden.

Eine zu Figur 1 alternative Ausführungsform ist in Figur 3 gezeigt.

Das in Figur 3 gezeigte Schaltbild unterscheidet sich von dem in Figur 1 gezeigtem Schaltbild grundsätzlich dadurch, dass zwei Schaltpositionen N1, N2 für die Unterbrechung der Drehmomentübertragung im Gangwechselgetriebe vorgesehen sind. Zum Auswählen der Schaltposition N1 oder N2 ist die Auswahleinrichtung ausgehend von der Grundstellung X in eine erste oder zweite Richtung auslenkbar, wobei die erste Richtung ungleich der zweiten Richtung ist. In der in Figur 3 gezeigten Ausführungsform ist die zweite Richtung die Gegenrichtung zur ersten Richtung. Zum Auswählen der Schaltposition R ist die Auswahleinrichtung ausgehend von der Schaltposition N1 in eine dritte Richtung auslenkbar, die verschieden von der ersten und zweiten Richtung und keine Gegenrichtung zur ersten und zweiten Richtung ist. Zum Auswählen der Schaltposition D ist die Auswahleinrichtung ausgehend von der Schaltposition N2 in eine Richtung auslenkbar, die ebenfalls gleich der dritten Richtung ist.

In Figur 4 ist ein Schaltbild gezeigt, dass sich von dem in Figur 1 gezeigtem Schaltbild dadurch unterscheidet, dass mittels der Auswahleinrichtung zusätzlich eine Schaltposition P für das Einlegen einer Parkbremse auswählbar ist, wobei die Auswahleinrichtung zum Auswählen der Schaltposition P ausgehend von der Schaltposition R in eine Richtung auslenkbar ist, die gleich der ersten Richtung von Figur 1 und somit zu einem Bediener der Auswahleinrichtung (Fahrerseite) hin orientiert ist.

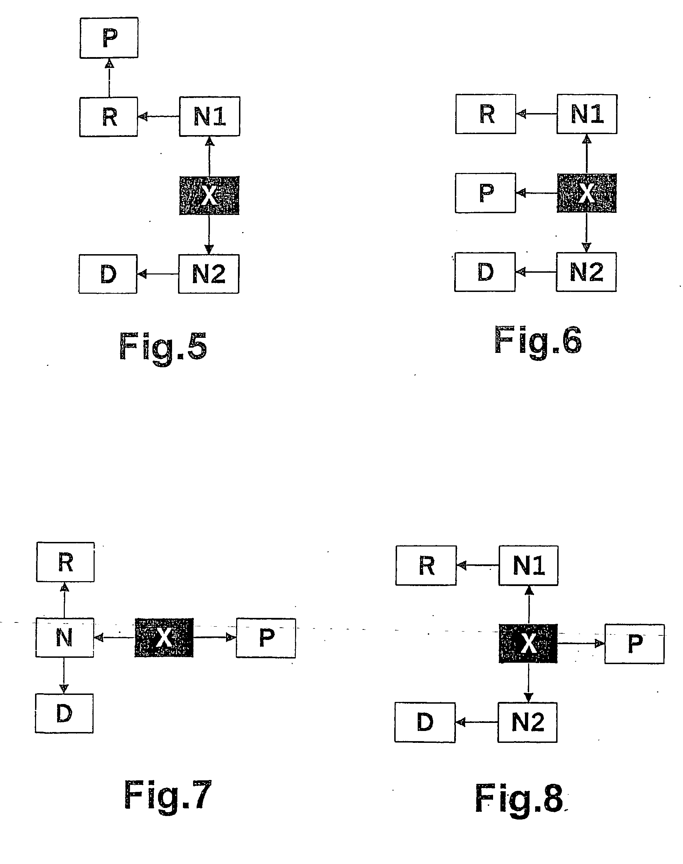

Figur 5 zeigt eine Abwandlung des in Figur 3 abgebildetem Schaltbildes das analog zu

Figur 4 eine Schaltposition P für das Einlegen einer Parkbremse aufweist.

In Figur 6 ist ein Schaltbild gezeigt, das ausgehend von der Grundstellung X durch Auslenken der Auswahleinrichtung in eine Richtung, die im Zusammenhang mit Figur 3 als "dritte Richtung" bezeichnet wurde, unmittelbar ein Auswählen der Schaltposition P erlaubt. Der Vorteil des Schaltbildes von Figur 6 ist in dem äußerst geringem Platzbedarf zu sehen.

Die Figuren 7-15 zeigen Schaltbilder, wie sie mit einem erfindungsgemäßen Signalgeber realisiert werden können, dessen Auswahleinrichtung in vier Richtungen auslenkbar ist. Dies erlaubt eine weitere Erhöhung der Anzahl der realisierbaren Schaltbilder.

Das in Figur 7 abgebildete Schaltbild greift die im Zusammenhang mit Figur 1 beschriebene Schaltung auf und unterscheidet sich von dieser dadurch, dass die Auswahleinrichtung zum Auswählen der Schaltposition P ausgehend von der Grundstellung X in eine vierte Richtung auslenkbar ist, die von der im Zusammenhang mit Figur 1 beschriebenen ersten, zweiten und dritten Richtung verschieden ist. In Figur 7 entspricht die vierte Richtung einem Auslenken der Auswahleinrichtung von einem Bediener der Auswahleinrichtung weg und somit zur Beifahrerseite hin.

In Figur 8 ist das in Zusammenhang mit Figur 3 beschriebene Schaltbild wieder aufgegriffen, wobei das in Figur 8 gezeigte Schaltbild analog zu Figur 7 eine Schaltposition P für das Einlegen einer Parkbremse zeigt.

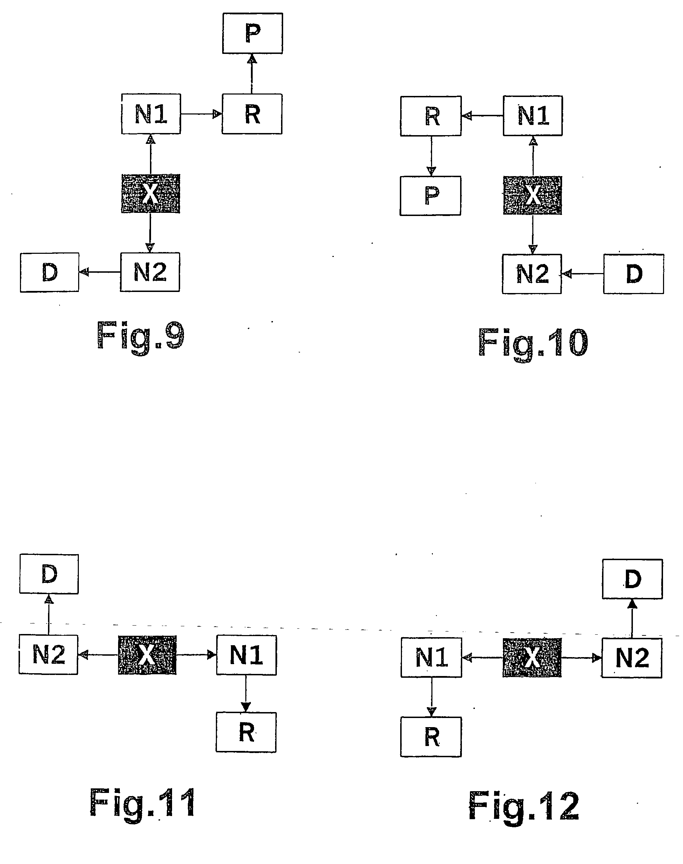

In Figur 9 ist ein Schaltbild abgebildet, bei dem die Schaltposition R für das Einlegen eines Rückwärtsganges und die Schaltposition D für das Einlegen eines Vorwärtsganges in Bezug auf die Grundstellung X punktsymmetrisch angeordnet sind. Weiter weist das in Figur 9 gezeigte Schaltbild eine Schaltposition P für das Einlegen einer Parkbremse auf. Insgesamt ergibt sich so ein treppenförmiger Verlauf der einzelnen Schaltpositionen.

Das in Figur 10 gezeigte Schaltbild ist mit Ausnahme der Anordnung der Schaltposition P spiegelsymmetrisch zu dem in Figur 9 gezeigten Schaltbild.

Die in Figuren 11 und 12 gezeigten Schaltbilder sind zueinander ebenfalls spiegelsymmetrisch und unterscheiden sich von den in Figur 9 und Figur 10 gezeigten Schaltbildern unter anderem dadurch, dass in den Figuren 9 und 10 die Schaltposition R in Bezug auf die Grundstellung X der Auswahleinrichtung in Vorwärtsrichtung eines Fahrzeuges, in dem der erfindungsgemäße Signalgeber montiert ist, angeordnet ist und die Schaltposition D in Bezug auf die Grundstellung X der Auswahleinrichtung in Rückwärtsfahrtrichtung des Fahrzeugs angeordnet ist, wohingegen in Figuren 11 und 12 die Schaltposition R in Bezug auf die Grundstellung X der Auswahleinrichtung in Rückwärtsfahrtrichtung und die Schaltposition D in Bezug auf die Grundstellung X der Auswahleinrichtung in Vorwärtsfahrtrichtung des Fahrzeuges angeordnet ist.

Weiter unterscheiden sich die Figuren 11 und 12 von den Figuren 9 und 10 dadurch, dass in den Figuren 11 und 12 keine Schaltposition P vorgesehen ist.

Ferner erfolgt in den Figuren 11 und 12 das Einlegen eines Antriebsganges D, R durch Auslenken der Auswahleinrichtung in oder entgegen der Fahrtrichtung, wohingegen in den

Figuren 9 und 10 das Einlegen eines Antriebsganges D, R durch Auslenken der Auswahleinrichtung quer zur Fahrzeugrichtung erfolgt.

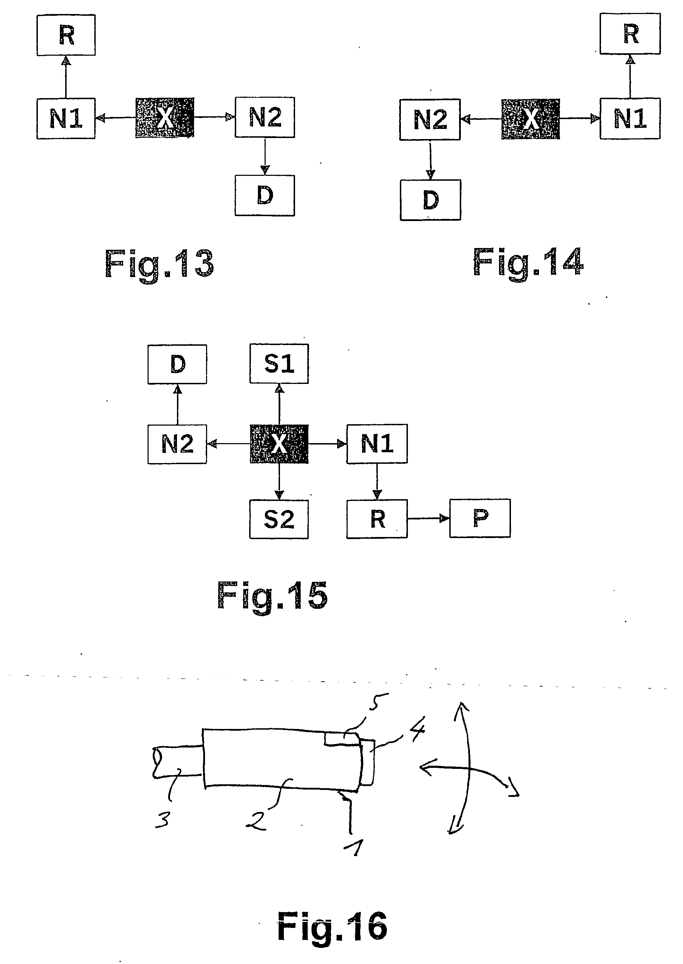

Die Figuren 13 und 14 entsprechen den Figuren 11 und 12, wobei die Anordnung der Schaltposition R für das Einlegen eines Rückwärtsganges und der Schaltposition D für das Einlegen eines Vorwärtsganges jeweils vertauscht ist.

Figur 15 zeigt einen Signalgeber mit einer in vier Richtungen auslenkbaren Auswahleinrichtung, die so ausgebildet ist, dass mittels der Auswahleinrichtung zusätzlich zum Einstellen der Betriebszustände der selbsttätigen Schaltvorrichtung des Gangwechselgetriebes weitere Vorrichtungen steuerbar sind, so dass die Auswahleinrichtung als Multifunktionselement ausgebildet werden kann.

Das Schaltbild zur Einstellung der Betriebszustände der selbsttätigen Schaltvorrichtung des Gangwechselgetriebes entspricht dabei dem in Figur 11 gezeigten Schaltbild, wobei zusätzlich eine Schaltposition P für das Einlegen einer Parkbremse vorgesehen ist.

Die zusätzlichen Schaltpositionen S1 und S2 dienen zum Auswählen zusätzlicher Funktionen des Getriebes oder von weiteren Vorrichtungen (z.B. Navigationsgerät, Radio, etc.).

Die Auswahleinrichtung des erfindungsgemäßen Signalgebers kann beispielsweise in Form eines Schalthebels ausgeführt und an einer Mittelkonsole eines Fahrzeugs angebracht sein (nicht abgebildet).

Vorzugsweise ist die Auswahleinrichtung jedoch, wie in Figur 16 gezeigt, in Form eines Lenkstockhebels 1 ausgeführt und mit einer (nicht gezeigten) Lenksäule eines Fahrzeuges gelenkig verbunden, so dass die Auswahleinrichtung in einer oder mehreren Lenkradebenen und in zu diesen senkrechten Ebenen bewegt werden kann. Der Lenkstockhebel 1 weist einem Betätigungsknauf 2, der am Ende einer Lenkstockhebelstange 3 angebracht ist, auf, wobei die Lenkstockhebelstange 3 mit ihrem nicht dargestellten Ende an einer ebenfalls nicht dargestellten Lenksäule eines Kraftfahrzeugs schwenkbar befestigt ist. Der Lenkstockhebel 1 dient als Auswahleinrichtung des erfindungsgemäßen Signalgebers und weist hierfür am nicht gezeigten Ende der Lenkstockhebelstange 3 elektrische Kontakte auf. Durch Schließung der Kontakte bei Auslenkung des Lenkstockhebels 1 werden Schaltbefehle an eine nicht gezeigte Auswertschaltung weitergegeben, die die selbsttätige Schaltvorrichtung des Gangwechselgetriebes sowie gegebenenfalls weitere Vorrichtungen steuert. Der Lenkstockhebel 1 ist so an der Lenksäule angelenkt, dass er entsprechend den Schaltbildern der Figuren 1 bis 15 ausgelenkt werden kann und sich nach einer Auslenkung selbsttätig in seine Grundstellung zurück bewegt. Weiter weist der in Figur 16 gezeigte Lenkstockhebel 1 einen Knopf 4 auf, der bei Schaltbildern, die keine eigene Schaltposition für das Einlegen einer Parkbremse aufweisen, dazu dient, einen Befehl zum Einlegen einer Parkbremse zu geben. Ferner weist der Lenkstockhebel 1 eine Rückfahr-Sperrtaste 5 auf, wobei der Lenkstockhebel 1 nur bei gedrückter Rückfahr-Sperrtaste 5 in eine Schaltposition R für das Einlegen eines Rückwärtsganges auslenkbar ist.

Der erfindungsgemäße Signalgeber kann ferner mit einer nicht gezeigten Anzeigeeinrichtung verbunden sein, die den jeweils aktivierten Betriebszustand der selbsttätigen Schaltvorrichtung des Gangwechselgetriebes anzeigt.

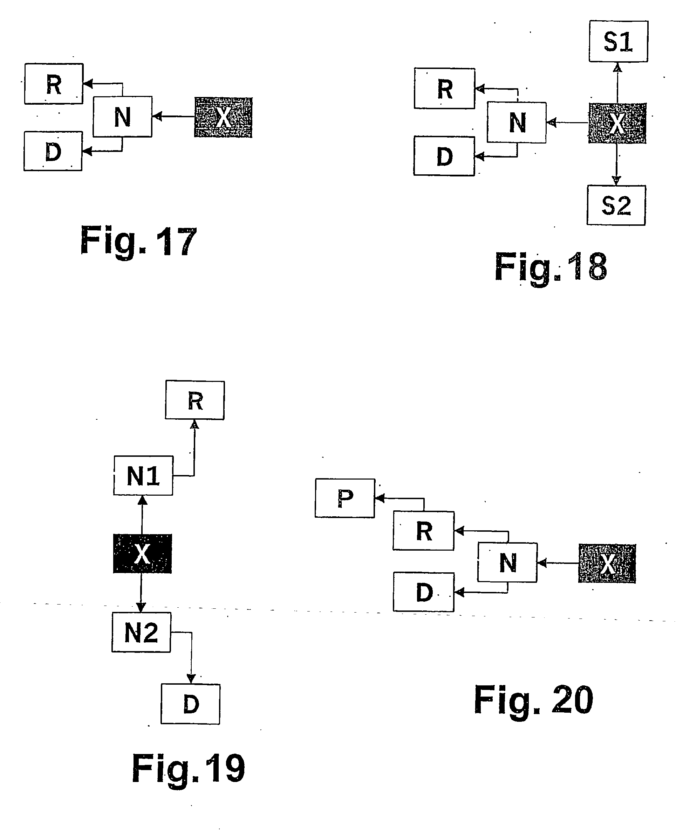

In den Figuren 17-31 ist eine Auswahl verschiedener Schaltbilder gezeigt, wie sie mit dem erfindungsgemäßen Signalgeber realisiert werden können.

Dabei bezeichnen die weiß hinterlegten Felder instabile Positionen der Auswahleinrichtung, d. h. Positionen, an denen die Auswahlrichtung nur so lange verweilt, so lange sie dort gehalten wird. Die weiß hinterlegten Felder sind mit den Buchstaben R, N, N1, N2, D, P, S1, S2 bezeichnet. R steht dabei für eine Schaltposition für das Einlegen eines Rückwärtsganges, N, N1, N2 für Schaltpositionen für die Unterbrechung der Drehmomentübertragung im Gangwechselgetriebe, D für eine Schaltposition für das Einlegen eines Vorwärtsganges, P für eine Schaltposition für das Einlegen einer Parkbremse und S1, S2 für Schaltpositionen für erste und zweite zusätzliche Funktionen. Die schwarz hinterlegten und mit X bezeichneten Felder symbolisieren die jeweilige stabile Grundstellung der Auswahleinrichtung, d. h. die jeweilige Position in einem Schaltbild, an der die Auswahleinrichtung verharrt, wenn sie nicht ausgelenkt wird, bzw. zu der die Auswahleinrichtung zurückkehrt, nachdem sie in eine instabile Position ausgelenkt worden ist.

Die Pfeile in den Figuren 17-31 geben die Richtungen an, in die die Auswahleinrichtung ausgehend von einer jeweiligen Position auslenkbar ist.

Die Figuren 17-22 zeigen Schaltbilder, wie sie mit einem Signalgeber realisiert werden können, dessen Auswahleinrichtung in nur drei Richtungen auslenkbar ist Besonders vorteilhaft an Signalgebern mit in drei Richtungen auslenkbaren Auswahleinrichtung ist neben dem einfachen Aufbau der Auswahleinrichtung der geringe Platzbedarf der realisierbaren Schaltbilder.

Figur 17 zeigt ein mögliches Schaltbild gemäß einer ersten bevorzugten Ausführungsform eines erfindungsgemäßen Signalgebers, bei dem die Auswahleinrichtung zum Auswählen der Schaltposition N für die Unterbrechung der Drehmomentübertragung im Gangwechselgetriebe ausgehend von der Grundstellung X in eine erst Richtung auslenkbar ist, und zum Auswählen der Schaltposition R für das Einlegen eines Rückwärtsganges ausgehend von der Schaltposition N zunächst in eine zweite Richtung auslenkbar ist, wobei die zweite Richtung keine Gegenrichtung zur ersten Richtung und von der ersten Richtung verschieden ist, und nach Auslenkung in die zweite Richtung wieder in die erste Richtung auslenkbar ist. Somit ergibt sich für die Auswahleinrichtung zum Auswählen der Schaltposition R für das Einlegen eines Rückwärtsganges ausgehend von der Schaltposition N insgesamt ein stufenförmiger Verlauf der Auslenkbewegung.

Bei der in Figur 17 gezeigten ersten Richtung kann es sich beispielsweise um eine Richtung hin zu einem Bediener der Auswahleinrichtung (Fahrerseite), und bei der zweiten Richtung um eine Vorwärtsfahrtrichtung eines Fahrzeugs, in dem der erfindungsgemäße Signalgeber montiert ist, handeln.

Zum Auswählen der Schaltposition D für das Einlegen eines Vorwärtsganges ist die Auswahleinrichtung ausgehend von der Schaltposition N zunächst in eine dritte Richtung auslenkbar, die eine von der ersten der zweiten Richtung verschiedene Richtung und keine Gegenrichtung zur ersten Richtung ist, und nach Auslenkung in die dritte Richtung wieder in die erste Richtung auslenkbar. Somit ergibt sich für die Auswahleinrichtung zum Auswählen der Schaltposition D für das Einlegen eines Vorwärtsganges ausgehend von der Schaltposition N wiederum ein insgesamt stufenförmiger Verlauf der Auslenkbewegung. In dem in Figur 17 gezeigtem Schaltbild handelt es sich bei der dritten Richtung um die Gegenrichtung der zweiten Richtung und somit um eine in Rückwärtsfahrtrichtung des Fahrzeugs orientierte Richtung.

Die Auslenkung der Auswahleinrichtung zwischen den einzelnen Schaltpositionen N und R bzw. N und D erfolgt dabei vorzugsweise ohne Pause durch eine einzige durchgehende stufenförmige Auslenkbewegung der Auswahleinrichtung.

Eine besonders bevorzugte Ausführungsform des in Figur 17 gezeigten Schaltbildes ist in Figur 18 dargestellt.

Figur 18 unterscheidet sich von Figur 17 dadurch, dass mittels der Auswahleinrichtung des erfindungsgemäßen Signalgebers zusätzlich zur Einstellung der Betriebszustände der selbsttätigen Schaltvorrichtung des Gangwechselgetriebes weitere Vorrichtungen steuerbar bzw. weitere Funktionen auswählbar sind. Dazu sind mittels der Auswahleinrichtung zusätzlich eine erste Schaltposition S1 für eine erste zusätzliche Funktion und eine zweite Schaltposition S2 für eine zweite zusätzliche Funktion auswählbar, wobei die Auswahleinrichtung zum Auswählen der Schaltposition S1 ausgehend von der Grundstellung X in eine Richtung auslenkbar ist, die gleich der zweiten Richtung von Figur 17 und somit gleich der Vorwärtsfahrtrichtung des Fahrzeugs ist. Zum Auswählen der Schaltposition S2 ist die Auswahleinrichtung ausgehend von der Grundstellung X in eine Richtung auslenkbar, die gleich der dritten Richtung von Figur 17 und somit gleich der Rückwärtsfahrtrichtung ist.

Die Schaltpositionen S1 und S2 können beispielsweise zum manuellen Schalten des Gangwechselgetriebes, aber auch zur Bedienung eines Navigationssystems, einer Fahrwerksregelung, einer Klimaanlage oder Steuerung einer sonstigen Vorrichtung verwendet werden.

Eine zu Figur 17 alternative Ausführungsform ist in Figur 19 gezeigt.

Das in Figur 19 gezeigte Schaltbild unterscheidet sich von dem in Figur 17 gezeigtem Schaltbild grundsätzlich dadurch, dass zwei Schaltpositionen N1, N2 für die Unterbrechung der Drehmomentübertragung im Gangwechselgetriebe vorgesehen sind. Zum Auswählen der Schaltposition N1 oder N2 ist die Auswahleinrichtung ausgehend von der Grundstellung X in eine erste oder zweite Richtung auslenkbar, wobei die erste Richtung ungleich der zweiten Richtung ist. In der in Figur 19 gezeigten Ausführungsform ist die zweite Richtung die Gegenrichtung zur ersten Richtung. Zum Auswählen der Schaltposition R ist die Auswahleinrichtung ausgehend von der Schaltposition N1 zunächst in eine dritte Richtung auslenkbar, die verschieden von der ersten und zweiten Richtung und keine Gegenrichtung zur ersten und zweiten Richtung ist, und nach Auslenkung in die dritte Richtung wieder in die erste bzw. zweite Richtung auslenkbar. Somit ergibt sich für die Auswahleinrichtung zum Auswählen der Schaltposition R für das Einlegen eines Rückwärtsganges ausgehend von der Schaltposition N1 insgesamt ein stufenförmiger Verlauf der Auslenkbewegung.

Zum Auswählen der Schaltposition D ist die Auswahleinrichtung ausgehend von der Schaltposition N2 zunächst in eine Richtung auslenkbar, die ebenfalls gleich der dritten Richtung ist, und nach Auslenkung in die dritte Richtung wieder in die erste bzw. zweite Richtung auslenkbar. Somit ergibt sich für die Auswahleinrichtung zum Auswählen der Schaltposition D für das Einlegen eines Vorwärtsganges ausgehend von der Schaltposition N2 wiederum ein insgesamt stufenförmiger Verlauf der Auslenkbewegung.

In Figur 20 ist ein Schaltbild gezeigt, dass sich von dem in Figur 17 gezeigtem Schaltbild dadurch unterscheidet, dass mittels der Auswahleinrichtung zusätzlich eine Schaltposition P für das Einlegen einer Parkbremse auswählbar ist, wobei die Auswahleinrichtung zum Auswählen der Schaltposition P ausgehend von der Schaltposition R zunächst in die zweite Richtung von Figur 17 und somit in Vorwärtsfahrtrichtung des Fahrzeugs auslenkbar ist, und nach Auslenkung in die zweite Richtung in eine Richtung auslenkbar ist, die gleich der ersten Richtung von Figur 17 und somit zu einem Bediener der Auswahleinrichtung (Fahrerseite) hin orientiert ist. Somit ergibt sich für die Auswahleinrichtung zum Auswählen der Schaltposition P für das Einlegen einer Parkbremse ausgehend von der Schaltposition R insgesamt ein stufenförmiger Verlauf der Auslenkbewegung.

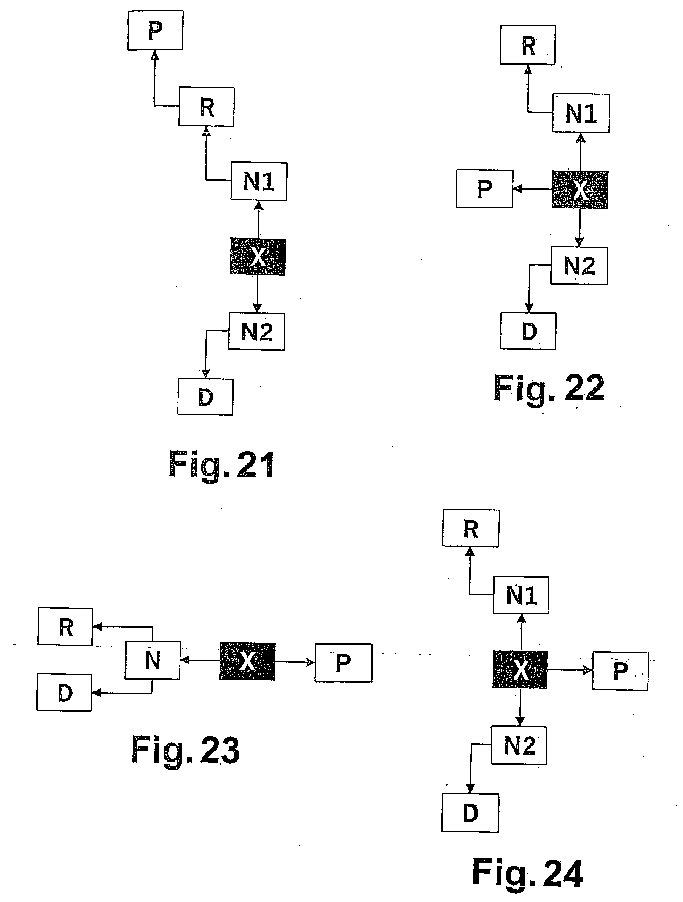

Figur 21 zeigt eine Abwandlung des in Figur 19 abgebildetem Schaltbildes, das analog zu

Figur 20 eine Schaltposition P für das Einlegen einer Parkbremse aufweist.

In Figur 22 ist ein Schaltbild gezeigt, das ausgehend von der Grundstellung X durch Auslenken der Auswahleinrichtung in eine Richtung, die im Zusammenhang mit Figur 19 als "dritte Richtung" bezeichnet wurde, unmittelbar ein Auswählen der Schaltposition P erlaubt. Der Vorteil des Schaltbildes von Figur 22 ist u.a. in dem äußerst geringem Platzbedarf zu sehen.

Die Figuren 23-31 zeigen Schaltbilder, wie sie mit einem erfindungsgemäßen Signalgeber realisiert werden können, dessen Auswahleinrichtung in vier Richtungen auslenkbar ist. Dies erlaubt eine deutliche Erhöhung der Anzahl der realisierbaren Schaltbilder.

Das in Figur 23 abgebildete Schaltbild greift die im Zusammenhang mit Figur 17 beschriebene Schaltung auf und unterscheidet sich von dieser dadurch, dass die Auswahleinrichtung zum Auswählen der Schaltposition P ausgehend von der Grundstellung X in eine vierte Richtung auslenkbar ist, die von der im Zusammenhang mit Figur 17 beschriebenen ersten, zweiten und dritten Richtung verschieden ist. In Figur 23 entspricht die vierte Richtung einem Auslenken der Auswahleinrichtung von einem Bediener der Auswahleinrichtung weg und somit zur Beifahrerseite hin.

In Figur 24 ist das in Zusammenhang mit Figur 19 beschriebene Schaltbild wieder aufgegriffen, wobei das in Figur 24 gezeigte Schaltbild analog zu Figur 23 zusätzlich eine aus der. Grundstellung X direkt erreichbare Schaltposition P für das Einlegen einer Parkbremse zeigt.

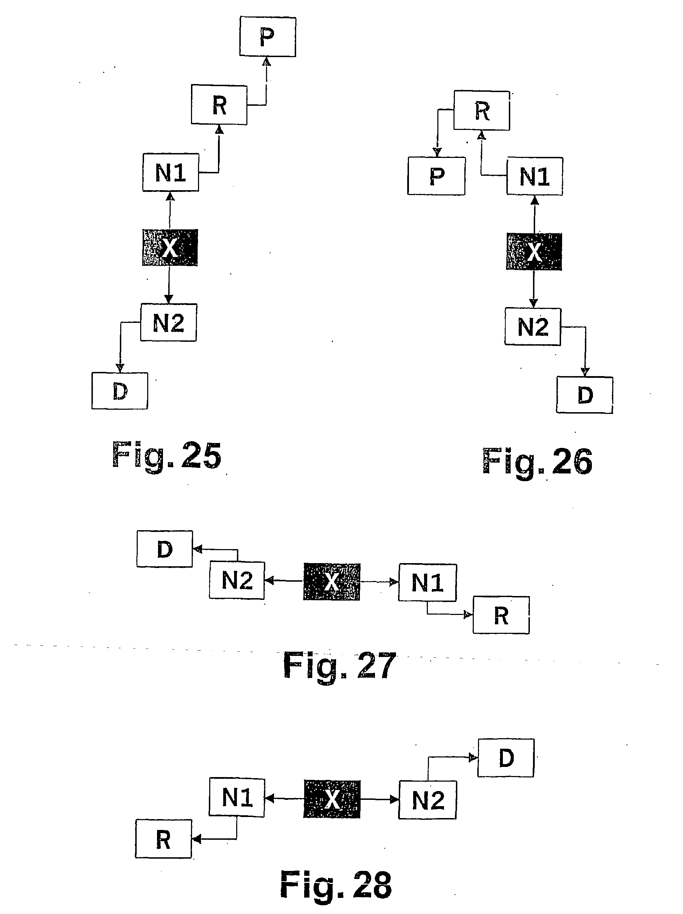

In Figur 25 ist ein Schaltbild abgebildet, bei dem die Schaltposition R für das Einlegen eines Rückwärtsganges und die Schaltposition D für das Einlegen eines Vorwärtsganges in Bezug auf die Grundstellung X punktsymmetrisch angeordnet sind. Weiter weist das in Figur 25 gezeigte Schaltbild eine Schaltposition P für das Einlegen einer Parkbremse auf. Insgesamt ergibt sich so eine treppenförmige Anordnung der einzelnen Schaltpositionen der Auswahleinrichtung.

Das in Figur 26 gezeigte Schaltbild ist mit Ausnahme der Anordnung der Schaltposition P spiegelsymmetrisch zu dem in Figur 25 gezeigten Schaltbild.

Durch die Umkehr der grundsätzlichen Auslenkrichtung der Auswahleinrichtung zum Auswählen der Schaltposition P wird ein versehentliches Einlegen der Parkbremse zusätzlich erschwert.

Die in Figuren 27 und 28 gezeigten Schaltbilder sind zueinander ebenfalls spiegelsymmetrisch und unterscheiden sich von den in Figur 25 und Figur 26 gezeigten Schaltbildern unter anderem dadurch, dass in den Figuren 25 und 26 die Schaltposition R in Bezug auf die Grundstellung X der Auswahleinrichtung in Vorwärtsrichtung eines Fahrzeuges, in dem der erfindungsgemäße Signalgeber montiert ist, angeordnet ist und die Schaltposition D in Bezug auf die Grundstellung X der Auswahleinrichtung in Rückwärtsfahrtrichtung des Fahrzeugs angeordnet ist, wohingegen in Figuren 27 und 28 die Schaltposition R in Bezug auf die Grundstellung X der Auswahleinrichtung in Rückwärtsfahrtrichtung und die Schaltposition D in Bezug auf die Grundstellung X der Auswahleinrichtung in Vorwärtsfahrtrichtung des Fahrzeuges angeordnet ist.

Weiter unterscheiden sich die Figuren 27 und 28 von den Figuren 25 und 26 dadurch, dass in den Figuren 27 und 28 keine Schaltposition P vorgesehen ist.

Ferner ist die grundsätzliche Auslenkrichtung der Auswahleinrichtung zwischen den einzelnen Schaltpositionen N1, N2, R, P, D nicht wie in den Figuren 25 und 26 in Fahrzeuglängsrichtung, sondern in Fahrzeugquerrichtung orientiert ist.

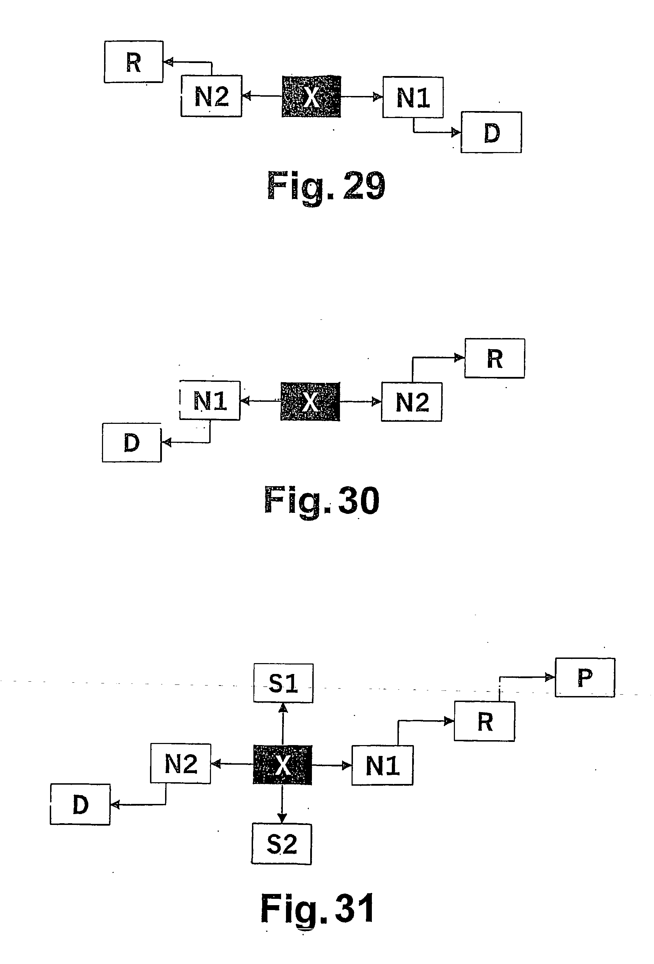

Die Figuren 29 und 30 entsprechen den Figuren 27 und 28, wobei die Anordnung der Schaltposition R für das Einlegen eines Rückwärtsganges und der Schaltposition D für das Einlegen eines Vorwärtsganges jeweils vertauscht ist.

Figur 31 zeigt einen Signalgeber mit einer in vier Richtungen auslenkbaren Auswahleinrichtung, die so ausgebildet ist, dass mittels der Auswahleinrichtung zusätzlich zum Einstellen der Betriebszustände der selbsttätigen Schaltvorrichtung des Gangwechselgetriebes weitere Vorrichtungen steuerbar sind, so dass die Auswahleinrichtung als Multifunktionselement ausgebildet werden kann.

Das Schaltbild zur Einstellung der Betriebszustände der selbsttätigen Schaltvorrichtung des Gangwechselgetriebes entspricht dabei dem in Figur 27 gezeigten Schaltbild, wobei zusätzlich eine Schaltposition P für das Einlegen einer Parkbremse vorgesehen ist.

Die zusätzlichen Schaltpositionen S1 und S2 dienen zum Auswählen zusätzlicher Funktionen des Getriebes oder zum Bedienen von weiteren Vorrichtungen (z.B. Navigationsgerät, Radio, etc.).

Die Auswahleinrichtung des erfindungsgemäßen Signalgebers kann beispielsweise in Form eines Schalthebels ausgeführt und an einer Mittelkonsole eines Fahrzeugs angebracht sein.

Vorzugsweise ist die Auswahleinrichtung jedoch in Form eines Lenkstockhebels ausgeführt und mit einer Lenksäule eines Fahrzeuges gelenkig verbunden, so dass die Auswahleinrichtung in einer oder mehreren Lenkradebenen und in zu diesen senkrechten Ebenen bewegt werden kann. Der Lenkstockhebel weist einem Betätigungsknauf, der an einem Ende einer Lenkstockhebelstange angebracht ist, auf, wobei die Lenkstockhebelstange mit ihrem anderen Ende an der Lenksäule des Kraftfahrzeugs schwenkbar befestigt ist. Der Lenkstockhebel dient als Auswahleinrichtung des erfindungsgemäßen Signalgebers und weist hierfür an seinem mit der Lenksäule verbundenen Ende der Lenkstockhebelstange elektrische Kontakte auf. Durch Schließung der Kontakte bei Auslenkung des Lenkstockhebels werden Schaltbefehle an eine Auswertschaltung weitergegeben, die die selbsttätige Schaltvorrichtung des Gangwechselgetriebes sowie gegebenenfalls weitere Vorrichtungen steuert. Der Lenkstockhebel ist so an der Lenksäule angelenkt, dass er entsprechend den Schaltbildern der Figuren 17 bis 31 ausgelenkt werden kann und sich nach einer Auslenkung selbsttätig in seine Grundstellung zurück bewegt. Weiter weist der Lenkstockhebel vorzugsweise einen Knopf auf, der bei Schaltbildern, die keine eigene Schaltposition für das Einlegen einer Parkbremse aufweisen, dazu dient, einen Befehl zum Einlegen einer Parkbremse zu geben. Ferner weist der Lenkstockhebel vorzugsweise eine Rückfahr-Sperrtaste auf, wobei der Lenkstockhebel nur bei gedrückter Rückfahr-Sperrtaste in eine Schaltposition R für das Einlegen eines Rückwärtsganges auslenkbar ist.

Der erfindungsgemäße Signalgeber kann ferner mit einer Anzeigeeinrichtung verbunden sein, die den jeweils aktivierten Betriebszustand der selbsttätigen Schaltvorrichtung des Gangwechselgetriebes anzeigt.

## Patentansprüche

1. Signalgeber zum Einstellen der Betriebszustände einer selbsttätigen Schaltvorrichtung eines Gangwechselgetriebes, aufweisend eine in wenigstens drei Richtungen auslenkbare, sich mindestens für bestimmte Schaltpositionen selbsttätig in eine Grundstellung (X) zurückstellende Auswahleinrichtung (1), mittels der zumindest eine Schaltposition (R) für das Einlegen eines Rückwärtsganges, eine Schaltposition (N) für die Unterbrechung der Drehmomentübertragung im Gangwechselgetriebe und eine Schaltposition (D) für das Einlegen eines Vorwärtsganges auswählbar ist, wobei die Auswahleinrichtung (1) zum Auswählen der Schaltposition (N; N1, N2) für die Unterbrechung der Drehmomentübertragung im Gangwechselgetriebe ausgehend von der Grundstellung (X) in eine erste Richtung auslenkbar ist, und dass die Auswahleinrichtung (1) zum Auswählen einer der weiteren Schaltpositionen (R, D) ausgehend von der Schaltposition (N; N1, N2) für die Unterbrechung der Drehmomentübertragung im Gangwechselgetriebe jeweils in eine weitere von der ersten Richtung verschiedene Richtung auslenkbar ist, die keine Gegenrichtung der ersten Richtung ist **dadurch gekennzeichnet, dass** die Auswahleinrichtung (1) aus der stabilen Grundstellung (X) zunächst durch Auslenken in die erste Richtung in die instabile Schaltposition (N, N1, N2) für die Unterbrechung der Drehmomentübertragung im Gangwechselgetriebe und anschließend durch Auslenken in die weitere, von der ersten Richtung verschiedenen Richtung in die weitere instabile Schaltposition (R, D) gebracht wird.

2. Signalgeber nach Anspruch 1,
**dadurch gekennzeichnet, dass**
die Auswahleinrichtung (1) zum Auswählen der Schaltposition (R) für das Einlegen eines Rückwärtsganges ausgehend von der Schaltposition (N) für die Unterbrechung der Drehmomentübertragung im Gangwechselgetriebe in eine zweite Richtung auslenkbar ist, die keine Gegenrichtung zu der ersten Richtung und von der ersten Richtung verschieden ist und dass die Auswahleinrichtung (1) zum Auswählen der Schaltposition (D) für das Einlegen eines Vorwärtsganges ausgehend von der Schaltposition (N) für die Unterbrechung der Drehmomentübertragung im Gangwechselgetriebe in eine dritte Richtung auslenkbar ist, die eine von der ersten und der zweiten Richtung verschiedene Richtung und keine Gegenrichtung zu der ersten Richtung ist.

3. Signalgeber nach Anspruch 1 oder 2,
**dadurch gekennzeichnet, dass**
der Signalgeber so ausgebildet ist, dass mittels der Auswahleinrichtung (1) zusätzlich zum Einstellen der Betriebszustände der selbsttätigen Schaltvorrichtung des Gangwechselgetriebes weitere Vorrichtungen steuerbar sind.

4. Signalgeber nach Anspruch 3 und 2,
**dadurch gekennzeichnet, dass**
mittels der Auswahleinrichtung (1) zusätzlich eine Schaltposition (S1) für eine erste zusätzliche Funktion und eine Schaltposition (S2) für eine zweite zusätzliche Funktion auswählbar ist, und dass die Auswahleinrichtung (1) zum Auswählen der Schaltposition (S1) für eine erste zusätzliche Funktion ausgehend von der Grundstellung (X) in eine Richtung auslenkbar ist, die gleich der zweiten Richtung ist, und dass die Auswahleinrichtung (1) zum Auswählen der Schaltposition (S2) für eine zweite zusätzliche Funktion ausgehend von der Grundstellung (X) in eine Richtung auslenkbar ist, die gleich der dritten Richtung ist.

5. Signalgeber nach Anspruch 1,
**dadurch gekennzeichnet, dass**
eine erste und eine zweite Schaltposition (N1, N2) für die Unterbrechung der Drehmomentübertragung im Gangwechselgetriebe vorgesehen ist, die Auswahleinrichtung (1) zum Auswählen der ersten oder der zweiten Schaltposition (N1, N2) für die Unterbrechung der Drehmomentübertragung im. Gangwechselgetriebe ausgehend von der Grundstellung (X) in die erste oder eine zweite Richtung auslenkbar ist, wobei die erste Richtung ungleich der zweiten Richtung ist, die Auswahleinrichtung (1) zum Auswählen der Schaltposition (R) für das Einlegen eines Rückwärtsganges ausgehend von der ersten Schaltposition (N1) für die Unterbrechung der Drehmomentübertragung im Gangwechselgetriebe in eine dritte Richtung auslenkbar ist, die verschieden von der ersten und zweiten Richtung und keine Gegenrichtung zur ersten und zweiten Richtung ist und die Auswahleinrichtung (1) zum Auswählen der Schaltposition (D) für das Einlegen eines Vorwärtsganges ausgehend von der zweiten Schaltposition (N2) für die Unterbrechung der Drehmomentübertragung im Gangwechselgetriebe in eine Richtung auslenkbar ist, die gleich der dritten Richtung ist.

6. Signalgeber nach einem der vorangegangenen Ansprüche,
**dadurch gekennzeichnet, dass**
mittels der Auswahleinrichtung (1) zusätzlich eine Schaltposition (P) für das Einlegen einer Parkbremse auswählbar ist.

7. Signalgeber nach Anspruch 6,
**dadurch gekennzeichnet, dass**
zum Auswählen der Schaltposition (P) für das Einlegen einer Parkbrernse die Auswahleinrichtung (1) ausgehend von der Schaltposition (R) für das Einlegen eines Rückwärtsganges in eine Richtung auslenkbar ist, die gleich der ersten Richtung ist.

8. Signalgeber nach Anspruch 6 und 5
**dadurch gekennzeichnet, dass**
zum Auswählen der Schaltposition (P) für das Einlegen einer Parkbremse die Auswahleinrichtung (1) ausgehend von der Grundstellung (X) in eine Richtung auslenkbar ist, die gleich der dritten Richtung ist.

9. Signalgeber nach einem der vorangegangenen Ansprüche,
**dadurch gekennzeichnet, dass**
die Auswahleinrichtung (1) in vier Richtungen auslenkbar ist.

10. Signalgeber nach Anspruch 9 und, 2 oder 5,
**dadurch gekennzeichnet, dass**
zum Auswählen der Schaltposition (P) für das Einlegen einer Parkbremse die Auswahleinrichtung (1) ausgehend von der Grundstellung (X) in eine vierte Richtung auslenkbar ist, die verschieden von der ersten, zweiten und dritten Richtung ist.

11. Signalgeber nach Anspruch 9,
**dadurch gekennzeichnet, dass**
eine erste und eine zweite Schaltposition (N1, N2) für die Unterbrechung der Drehmomentübertragung im Gangwechselgetriebe vorgesehen ist, dass die Auswahleinrichtung (1) zum Auswählen der ersten oder der zweiten Schaltposition (N1, N2) für die Unterbrechung der Drehmomentübertragung im Gangwechselgetriebe ausgehend von der Grundstellung (X) in eine erste oder zweite Richtung auslenkbar ist, wobei die erste Richtung ungleich der zweiten Richtung ist, dass die Auswahleinrichtung (1) zum Auswählen der Schaltposition (R) für das Einlegen eines Rückwärtsganges ausgehend von der ersten Schaltposition (N1) für die Unterbrechung der Drehmomentübertragung im Gangwechselgetriebe in eine dritte Richtung auslenkbar ist, die verschieden von der ersten und zweiten Richtung und keine Gegenrichtung zur ersten und zweiten Richtung ist und dass die Auswahleinrichtung (1) zum Auswählen der Schaltposition (D) für das Einlegen eines Vorwärtsganges ausgehend von der zweiten Schaltposition (N2) für die Unterbrechung der Drehmomentübertragung im Gangwechselgetriebe in eine vierte Richtung auslenkbar ist, die verschieden von der ersten, zweiten und dritten Richtung und keine Gegenrichtung zur ersten und zweiten Richtung ist.

12. Signalgeber nach Anspruch 11,
**dadurch gekennzeichnet, dass**
zum Auswählen der Schaltposition (P) für das Einlegen einer Parkbremse die Auswahleinrichtung (1) ausgehend von der Schaltposition (R) für das Einlegen eines Rückwärtsganges in eine Richtung auslenkbar ist, die gleich der ersten oder zweiten Richtung ist.

13. Signalgeber nach Anspruch 11,
**dadurch gekennzeichnet, dass**
mittels der Auswahleinrichtung (1) zusätzlich eine Schaltposition (S1) für eine erste zusätzliche Funktion und eine Schaltposition (S2) für eine zweite zusätzliche Funktion auswählbar ist, und dass zum Auswählen der Schaltposition (S1) für eine erste zusätzliche Funktion die Auswahleinrichtung (1) ausgehend von der Grundstellung (X) in eine Richtung auslenkbar ist, die gleich der dritten Richtung ist, und dass zum Auswählen der Schaltposition (S2) für eine zweite zusätzliche Funktion die Auswahleinrichtung (1) ausgehend von der Grundstellung (X) in eine Richtung auslenkbar ist, die gleich der vierten Richtung ist.

14. Signalgeber nach einem der vorangegangenen Ansprüche,
**dadurch gekennzeichnet, dass**
der Signalgeber zusätzlich eine Parktaste (4) aufweist, und dass durch Drücken der Parktaste (4) eine Parkbremse einlegbar ist.

15. Signalgeber nach Anspruch 14,
**dadurch gekennzeichnet, dass**
die Parktaste (4) an der Auswahleinrichtung (1) angeordnet ist.

16. Signalgeber nach einem der vorangegangenen Ansprüche,
**dadurch gekennzeichnet, dass**
der Signalgeber zusätzlich eine Rückfahr-Sperrtaste (5) aufweist, und dass die Auswahleinrichtung (1) zum Auswählen der Schaltposition (R) für das Einlegen eines Rückwärtsganges nur bei gedrückter Rückfahr-Sperrtaste (5) auslenkbar ist.

17. Signalgeber nach Anspruch 16,
**dadurch gekennzeichnet, dass**
die Rückfahr-Sperrtaste (5) an der Auswahleinrichtung (1) angeordnet ist.

18. Signalgeber nach einem der vorangegangenen Ansprüche,
**dadurch gekennzeichnet, dass**
der Signalgeber in einem Fahrzeug montiert ist.

19. Signalgeber nach Anspruch 18,
**dadurch gekennzeichnet, dass**
die Schaltposition (R) für das Einlegen eines Rückwärtsganges in Bezug auf die Grundstellung (X) der Auswahleinrichtung (1) in Vorwärtsfahrtrichtung des Fahrzeugs angeordnet ist, und dass die Schaltposition (D) für das Einlegen eines Vorwärtsganges in Bezug auf die Grundstellung (X) der Auswahleinrichtung (1) in Rückwärtsfahrtrichtung des Fahrzeugs angeordnet ist.

20. Signalgeber nach Anspruch 18,
**dadurch gekennzeichnet, dass**
die Schaltposition (R) für das Einlegen eines Rückwärtsganges in Bezug auf die Grundstellung (X) der Auswahleinrichtung (1) in Rückwärtsfahrtrichtung des Fahrzeugs angeordnet ist, und dass die Schaltposition (D) für das Einlegen eines Vorwärtsganges in Bezug auf die Grundstellung (X) der Auswahleinrichtung (1) in Vorwärtsfahrtrichtung des Fahrzeugs angeordnet ist.

21. Signalgeber nach einem der Ansprüche 18 bis 20,
**dadurch gekennzeichnet, dass**
die Schaltposition (R) für das Einlegen eines-Rückwärtsganges und die Schaltposition (D) für das Einlegen eines Vorwärtsganges in Bezug auf die Grundstellung (X) der Auswahleinrichtung (1) punktsymmetrisch angeordnet sind.

22. Signalgeber nach einem der Ansprüche 18 bis 21,
**dadurch gekennzeichnet, dass**
die Auswahleinrichtung (1) in Form eines an einer Lenksäule des Fahrzeugs angeordneten Lenkstockhebels ausgeführt ist.

23. Signalgeber nach einem der Ansprüche 18 bis 21,
**dadurch gekennzeichnet, dass**
die Auswahleinrichtung (1) in Form eines an einer Mittelkonsole des Fahrzeugs angeordneten Schalthebels ausgeführt ist.

24. Signalgeber nach Anspruch 1,
**dadurch gekennzeichnet, dass**
die Auswahleinrichtung (1) zum Auswählen der Schaltposition (N; N1, N2) für die Unterbrechung der Drehmomentübertragung im Gangwechselgetriebe ausgehend von der Grundstellung (X) in die erste Richtung auslenkbar ist und dass die Auswahleinrichtung (1) zum Auswählen einer der weiteren Schaltpositionen (R, D) ausgehend von der Schaltposition (N; N1, N2) für die Unterbrechung der Drehmomentübertragung im Gangwechselgetriebe zunächst jeweils in die weitere, von der ersten Richtung verschiedene Richtung auslenkbar ist, die keine Gegenrichtung der ersten Richtung ist, und nach Auslenkung in die jeweils weitere Richtung wieder in die erste Richtung auslenkbar ist.

25. Signalgeber nach Anspruch 24,
**dadurch gekennzeichnet, dass**
die Auswahleinrichtung (1) zum Auswählen der Schaltposition (R) für das Einlegen eines Rückwärtsganges ausgehend von der Schaltposition (N) für die Unterbrechung der Drehmomentübertragung im Gangwechselgetriebe zunächst in eine zweite Richtung auslenkbar ist, die keine Gegenrichtung zu der ersten Richtung und von der ersten Richtung verschieden ist, und nach Auslenkung in die zweite Richtung wieder in die erste Richtung auslenkbar ist und dass die Auswahleinrichtung (1) zum Auswählen der Schaltposition (D) für das Einlegen eines Vorwärtsganges ausgehend von der Schaltposition (N) für die Unterbrechung der Drehmomentübertragung im Gangwechselgetriebe zunächst in eine dritte Richtung auslenkbar ist, die eine von der ersten und der zweiten Richtung verschiedene Richtung und keine Gegenrichtung zu der ersten Richtung ist, und nach Auslenkung in die dritte Richtung wieder in die erste Richtung auslenkbar ist.

26. Signalgeber nach Anspruch 24 oder 25,
**dadurch gekennzeichnet, dass**
der Signalgeber so ausgebildet ist, dass mittels der Auswahleinrichtung (1) zusätzlich zum Einstellen der Betriebszustände der selbsttätigen Schaltvorrichtung des Gangwechselgetriebes weitere Vorrichtungen steuerbar sind.

27. Signalgeber nach Anspruch 26 und 25,
**dadurch gekennzeichnet, dass**
mittels der Auswahleinrichtung (1) zusätzlich eine Schaltposition (S1) für eine erste zusätzliche Funktion und eine Schaltposition (S2) für eine zweite zusätzliche Funktion auswählbar ist, und dass die Auswahleinrichtung (1) zum Auswählen der Schaltposition (S1) für eine erste zusätzliche Funktion ausgehend von der Grundstellung (X) in eine Richtung auslenkbar ist, die gleich der zweiten Richtung ist, und dass die Auswahleinrichtung (1) zum Auswählen der Schaltposition (S2) für eine zweite zusätzliche Funktion ausgehend von der Grundstellung (X) in eine Richtung auslenkbar ist, die gleich der dritten Richtung ist.

28. Signalgeber nach Anspruch 24,
**dadurch gekennzeichnet, dass**
eine erste und eine zweite Schaltposition (N1, N2) für die Unterbrechung der Drehmomentübertragung im Gangwechselgetriebe vorgesehen ist, dass die Auswahleinrichtung (1) zum Auswählen der ersten oder der zweiten Schaltposition (N1, N2) für die Unterbrechung der Drehmomentübertragung im Gangwechselgetriebe ausgehend von der Grundstellung (X) in die erste oder zweite Richtung auslenkbar ist, wobei die erste Richtung ungleich der zweiten Richtung ist, dass die Auswahleinrichtung (1) zum Auswählen der Schaltposition (R) für das Einlegen eines Rückwärtsganges ausgehend von der ersten Schaltposition (N 1) für die Unterbrechung der Drehmomentübertragung im Gangwechselgetriebe zunächst in eine dritte Richtung auslenkbar ist, die verschieden von der ersten und zweiten Richtung und keine Gegenrichtung zur ersten und zweiten Richtung ist, und nach Auslenkung in die dritte Richtung wieder in die erste oder zweite Richtung auslenkbar ist, und dass die Auswahleinrichtung (1) zum Auswählen der Schaltposition (D) für das Einlegen eines Vorwärtsganges ausgehend von der zweiten Schaltposition (N2) für die Unterbrechung der Drehmomentübertragung im Gangwechselgetriebe zunächst in eine Richtung auslenkbar ist, die gleich der dritten Richtung ist, und nach Auslenkung in die dritte Richtung wieder in die erste oder zweite Richtung auslenkbar ist.

29. Signalgeber nach einem der vorangegangenen Ansprüche 24 bis 28,
**dadurch gekennzeichnet, dass**
mittels der Auswahleinrichtung (1) zusätzlich eine Schaltposition (P) für das Einlegen
einer Parkbremse auswählbar ist.

30. Signalgeber nach Anspruch 29,
**dadurch gekennzeichnet, dass**
zum Auswählen der Schaltposition (P) für das Einlegen einer Parkbremse die Auswahleinrichtung (1) ausgehend von der Schaltposition (R) für das Einlegen eines Rückwärtsganges zunächst in die jeweils weitere Richtung auslenkbar ist, und nach Auslenkung in die jeweils weitere Richtung in eine Richtung auslenkbar ist, die gleich der ersten Richtung oder einer Gegenrichtung zur ersten Richtung ist.

31. Signalgeber nach einem der vorangegangenen Ansprüche 24 bis 30,
**dadurch gekennzeichnet, dass**
die Auswahleinrichtung (1) in vier Richtungen auslenkbar ist.

32. Signalgeber nach Anspruch 31,
**dadurch gekennzeichnet, dass**
eine erste und eine zweite Schaltposition (N1, N2) für die Unterbrechung der Drehmomentübertragung im Gangwechselgetriebe vorgesehen ist, dass die Auswahleinrichtung (1) zum Auswählen der ersten oder der zweiten Schaltposition (N1, N2) für die Unterbrechung der Drehmomentübertragung im Gangwechselgetriebe ausgehend von der Grundstellung (X) in die erste oder eine zweite Richtung auslenkbar ist, wobei die erste Richtung ungleich der zweiten Richtung ist, dass die Auswahleinrichtung (1) zum Auswählen der Schaltposition (R) für das Einlegen eines Rückwärtsganges ausgehend von der ersten Schaltposition (N1) für die Unterbrechung der Drehmomentübertragung im Gangwechselgetriebe zunächst in eine dritte Richtung auslenkbar ist, die verschieden von der ersten und zweiten Richtung und keine Gegenrichtung zur ersten und zweiten Richtung ist, und nach Auslenkung in die dritte Richtung wieder in die erste oder zweite Richtung auslenkbar ist, und dass die Auswahleinrichtung (1) zum Auswählen der Schaltposition (D) für das Einlegen eines Vorwärtsganges ausgehend von der zweiten Schaltposition (N2) für die Unterbrechung der Drehmomentübertragung im Gangwechselgetriebe zunächst in eine vierte Richtung auslenkbar ist, die verschieden von der ersten, zweiten und dritten Richtung und keine Gegenrichtung zur ersten und zweiten Richtung ist, und nach Auslenkung in die vierte Richtung wieder in die erste oder zweite Richtung auslenkbar ist.

33. Signalgeber nach Anspruch 32,
**dadurch gekennzeichnet, dass**
zum Auswählen der Schaltposition (P) für das Einlegen einer Parkbremse die Auswahleinrichtung (1) ausgehend von der Schaltposition (R) für das Einlegen eines Rückwärtsganges zunächst in die dritte oder vierte Richtung auslenkbar ist, und nach Auslenkung in die dritte oder vierte Richtung in eine Richtung auslenkbar ist, die gleich der ersten oder zweiten Richtung ist.

34. Signalgeber nach Anspruch 32,
**dadurch gekennzeichnet, dass**
mittels der Auswahleinrichtung (1) zusätzlich eine Schaltposition (S1) für eine erste zusätzliche Funktion und eine Schaltposition (S2) für eine zweite zusätzliche Funktion auswählbar ist, und dass zum Auswählen der Schaltposition (S1) für eine erste zusätzliche Funktion die Auswahleinrichtung (1) ausgehend von der Grundstellung (X) in eine Richtung auslenkbar ist, die gleich der dritten Richtung ist, und dass zum Auswählen der Schaltposition (S2) für eine zweite zusätzliche Funktion die Auswahleinrichtung (1) ausgehend von der Grundstellung (X) in eine Richtung auslenkbar ist, die gleich der vierten Richtung ist.

## Claims

1. Signal transmitter for setting the operating states of an automatic shifting device of a gear change mechanism, having a selection means (1), which can be deflected in at least three directions, automatically returns into a normal position (X) at least for certain shift positions, and by means of which at least one shift position (R) for engaging a reverse gear, a shift position (N) for the interruption of the torque transmission in the gear change mechanism and a shift position (D) for engaging a forward gear can be selected, wherein
the selection means (1) can be deflected in a first direction for selecting the shift position (N; N1, N2) for the interruption of the torque transmission in the gear change mechanism starting from the normal position (X), and wherein the selection means (1) can be deflected for selecting one of the additional shift positions (R, D) starting from the shift position (N; N1, N2) for the interruption of the torque transmission in the gear change mechanism in another direction that is different from the first direction and is not the opposite direction to the first direction,
**characterized in that**
the selection means (1) is brought from the stable normal position (X) first into the unstable shift position (N; N1, N2) for the interruption of the torque transmission in the gear change mechanism by deflection in the first direction, and is subsequently brought into the other unstable shift position (R, D) by deflection in the other direction which is different from the first direction.

2. Signal transmitter according to claim 1,
**characterized in that**
the selection means (1) can be deflected for selecting the shift position (R) for engaging a reverse gear starting from the shift position (N) for the interruption of the torque transmission in the gear change mechanism in a second direction, which is not the opposite direction to the first direction and is different from the first direction, and **in that** the selection means (1) can be deflected for selecting the shift position (D) for engaging a forward gear starting from the shift position (N) for the interruption of the torque transmission in the gear change mechanism in a third direction that is different from the first and second directions and is not the opposite direction to the first direction.

3. Signal transmitter according to claim 1 or 2, **characterized in that**
the signal transmitter is designed such that additional devices can be controlled by means of the selection means (1) in addition to the setting of the operating states of the automatic shifting device of the gear change mechanism.

4. Signal transmitter according to claims 3 and 2, **characterized in that**
a shift position (S1) for a first additional function and a shift position (S2) for a second additional function can be additionally selected by means of the selection means (1), and **in that** the selection means (1) can be deflected in a direction that is the same as the second direction starting from the normal position (X) for selecting the shift position (S1) for a first additional function, and **in that** the selection means (1) can be deflected in a direction that is the same as the third direction starting from the normal position (X) for selecting the shift position (S2) for a second additional function.

5. Signal transmitter according to claim 1,
**characterized in that**
a first and a second shift position (N1, N2) are provided for the interruption of the torque transmission in the gear change mechanism, the selection means (1) can be deflected for selecting the first and second shift position (N1, N2) for the interruption of the torque transmission in the gear change mechanism starting from the normal position (X) in the first or a second direction, wherein the first direction is not the same as the second direction, the selection means (1) can be deflected for selecting the shift position (R) for engaging a reverse gear starting from the first shift position (N1) for the interruption of the torque transmission in the gear change mechanism in a third direction that is different from the first and second directions and is not the opposite direction to the first and second directions, and the selection means (1) can be deflected for selecting the shift position (D) for engaging a forward gear starting from the second shift position (N2) for the interruption of the torque transmission in the gear change mechanism in a direction that is the same as the third direction.

6. Signal transmitter according to one of the preceding claims,
**characterized in that**
a shift position (P) for engaging a parking brake can be additionally selected by means of the selection means (1).

7. Signal transmitter according to claim 6,
**characterized in that**
to select the shift position (P) for engaging a parking brake, the selection means (1) can be deflected starting from the shift position (R) for engaging a reverse gear in a direction that is the same as the first direction.

8. Signal transmitter according to claim 6 and 5, **characterized in that**
to select the shift position (P) for engaging a parking brake, the selection means (1) can be deflected starting from the normal position (X) in a direction that is the same as the third direction.

9. Signal transmitter according to one of the preceding claims,
**characterized in that**
the selection means (1) can be deflected in four directions.

10. Signal transmitter according to claim 9, and 2 or 5, **characterized in that**
to select the shift position (P) for engaging a parking brake, the selection means (1) can be deflected starting from the normal position (X) in a fourth direction that is different from the first, second and third directions.

11. Signal transmitter according to claim 9, **characterized in that**
a first and a second shift position (N1, N2) are provided for the interruption of the torque transmission in the gear change mechanism, **in that** the selection means (1) can be deflected for selecting the first or second shift position (N1, N2) for the interruption of the torque transmission in the gear change mechanism starting from the normal position (X) in a first or second direction, wherein the first direction is not the same as the second direction, **in that** the selection means (1) can be deflected for selecting the shift position (R) for engaging a reverse gear starting from the first shift position (N1) for the interruption of the torque transmission in the gear change mechanism in a third direction, which is different from the first and second directions and is not the opposite direction to the first and second directions, and **in that** the selection means (1) can be deflected for selecting the shift position (D) for engaging a forward gear starting from the second shift position (N2) for the interruption of the torque transmission in the gear change mechanism in a fourth direction, which is different from the first, second and third directions and is not the opposite direction to the first and second directions.

12. Signal transmitter according to claim 11, **characterized in that**
to select the shift position (P) for engaging a parking brake, the selection means (1) can be deflected starting from the shift position (R) for engaging a reverse gear in a direction that is the same as the first or second direction.

13. Signal transmitter according to claim 11, **characterized in that**
a shift position (S1) for a first additional function and a shift position (S2) for a second additional function can be additionally selected by means of the selection means (1), and **in that** the selection means (1) can be deflected for selecting the shift position (S1) for a first additional function starting from the normal position (X) in a direction that is the same as the third direction, and **in that** the selection means (1) can be deflected for selecting the shift position (S2) for a second additional function starting from the normal position (X) in a direction that is the same as the fourth direction.

14. Signal transmitter according to one of the preceding claims,
**characterized in that**
the signal transmitter additionally has a park button (4), and **in that** a parking brake can be engaged by pressing said park button (4).

15. Signal transmitter according to claim 14, **characterized in that**
the park button (4) is disposed on the selection means (1).

16. Signal transmitter according to one of the preceding claims,
**characterized in that**
the signal transmitter additionally has a reverse lock button (5), and **in that** the selection means (1) can be deflected for selecting the shift position (R) for engaging a reverse gear only when said reverse lock button (5) is pressed.

17. Signal transmitter according to claim 16, **characterized in that**
the reverse lock button (5) is disposed on the selection means (1).

18. Signal transmitter according to one of the preceding claims,
**characterized in that**
the signal transmitter is mounted in a vehicle.

19. Signal transmitter according to claim 18, **characterized in that**
the shift position (R) for engaging a reverse gear is arranged in the forward travel direction of the vehicle in relation to the normal position (X) of the selection means (1), and **in that** the shift position (D) for engaging a forward gear is arranged in the reverse travel direction of the vehicle in relation to the normal position (X) of the selection means (1).

20. Signal transmitter according to claim 18, **characterized in that**
the shift position (R) for engaging a reverse gear is arranged in the reverse travel direction of the vehicle in relation to the normal position (X) of the selection means (1), and **in that** the shift position (D) for engaging a forward gear is arranged in the forward travel direction of the vehicle in relation to the normal position (X) of the selection means (1).

21. Signal transmitter according to one of claims 18 to 20, **characterized in that**
the shift position (R) for engaging a reverse gear and the shift position (D) for engaging a forward gear are arranged point-symmetrically in relation to the normal position (X) of the selection means (1).

22. Signal transmitter according to one of claims 18 to 21, **characterized in that**
the selection means (1) is designed in the form of a steering column arm disposed on a steering column of the vehicle.

23. Signal transmitter according to one of claims 18 to 21, **characterized in that**
the selection means (1) is designed in the form of a gearshift lever disposed on a central console of the vehicle.

24. Signal transmitter according to claim 1,
**characterized in that**
the selection means (1) can be deflected in the first direction for selecting the shift position (N; N1, N2) for the interruption of the torque transmission in the gear change mechanism starting from the normal position (X), and **in that** the selection means (1) can be deflected in the other direction that is different from the first direction and is not the opposite direction to the first direction for selecting one of the additional shift positions (R, D) starting from the shift position (N; N1, N2) for the interruption of the torque transmission in the gear change mechanism, and can again be deflected in the first direction after the deflection in the respective other direction.

25. Signal transmitter according to claim 24, **characterized in that**
the selection means (1) can be deflected for selecting the shift position (R) for engaging a reverse gear starting from the shift position (N) for the interruption of the torque transmission in the gear change mechanism first in a second direction, which is not the opposite direction to the first direction and is different from the first direction, and can again be deflected in the first direction after the deflection in the second direction, and **in that** the selection means (1) can be deflected for selecting the shift position (D) for engaging a forward gear starting from the shift position (N) for the interruption of the torque transmission in the gear change mechanism first in a third direction, which is a direction different from the first and second directions and is not the opposite direction to the first direction, and can again be deflected in the first direction after the deflection in the third direction.

26. Signal transmitter according to claim 24 or 25, **characterized in that**
the signal transmitter is designed such that additional devices can be controlled by means of the selection means (1) in addition to the setting of the operating states of the automatic shifting device of the gear change mechanism.

27. Signal transmitter according to claim 26 and 25, **characterized in that**
a shift position (S1) for a first additional function and a shift position (S2) for a second additional function can be additionally selected by means of the selection means (1), and **in that** the selection means (1) can be deflected in a direction that is the same as the second direction starting from the normal position (X) for selecting the shift position (S1) for a first additional function, and **in that** the selection means (1) can be deflected in a direction that is the same as the third direction starting from the normal position (X) for selecting the shift position (S2) for a second additional function.

28. Signal transmitter according to claim 24, **characterized in that**
first and second shift positions (N1, N2) are provided for the interruption of the torque transmission in the gear change mechanism, **in that** the selection means (1) can be deflected for selecting the first or second shift position (N1, N2) for the interruption of the torque transmission in the gear change mechanism starting from the normal position (X) in the first or second direction, wherein the first direction is not the same as the second direction, **in that** the selection means (1) can be deflected for selecting the shift position (R) for engaging a reverse gear starting from the first shift position (N1) for the interruption of the torque transmission in the gear change mechanism first in a third direction, which is different from the first and second directions and is not the opposite direction to the first and second directions, and can again be deflected in the first or second direction after the deflection in the third direction, and **in that** the selection means (1) can be deflected for selecting the shift position (D) for engaging a forward gear starting from the second shift position (N2) for the interruption of the torque transmission in the gear change mechanism first in a direction that is the same as the third direction, and can again be deflected in the first or second direction after the deflection in the third direction.

29. Signal transmitter according to one of the preceding claims 24 to 28,
**characterized in that**
a shift position (P) for engaging a parking brake can be selected by means of the selection means (1).

30. Signal transmitter according to claim 29, **characterized in that**
to select the shift position (P) for engaging a parking brake, the selection means (1) can be deflected starting from the shift position (R) for engaging a reverse gear first in the respective other direction, and, after the deflection in the respective other direction, can be deflected in a direction that is the same as the first direction or is the opposite direction to the first direction.

31. Signal transmitter according to one of the preceding claims 24 to 30,
**characterized in that**
the selection means (1) can be deflected in four directions.

32. Signal transmitter according to claim 31, **characterized in that**
a first and a second shift position (N1, N2) are provided for the interruption of the torque transmission in the gear change mechanism, **in that** the selection means (1) can be deflected for selecting the first or second shift position (N1, N2) for the interruption of the torque transmission in the gear change mechanism starting from the normal position (X) in the first or a second direction, wherein the first direction is not the same as the second direction, **in that** the selection means (1) can be deflected for selecting the shift position (R) for engaging a reverse gear starting from the first shift position (N1) for the interruption of the torque transmission in the gear change mechanism first in a third direction, which is different from the first and second directions and is not the opposite direction to the first and second directions, and can again be deflected in the first or second direction after the deflection in the third direction, and **in that** the selection means (1) can be deflected for selecting the shift position (D) for engaging a forward gear starting from the second shift position (N2) for the interruption of the torque transmission in the gear change mechanism first in a fourth direction, which is different from the first, second and third directions and is not the opposite direction to the first and second directions, and can again be deflected in the first or second direction after the deflection in the fourth direction.

33. Signal transmitter according to claim 32, **characterized in that**
to select the shift position (P) for engaging a parking brake, the selection means (1) can be deflected first in the third or fourth direction starting from the shift position (R) for engaging a reverse gear, and can be deflected in a direction that is the same as the first or second direction after the deflection in the third or fourth direction.

34. Signal transmitter according to claim 32, **characterized in that**
a shift position (S1) for a first additional function and a shift position (S2) for a second additional function can be additionally selected by means of the selection means (1), and **in that** the selection means (1) can be deflected in a direction that is the same as the third direction starting from the normal position (X) for selecting the shift position (S1) for a first additional function, and **in that** the selection means (1) can be deflected in a direction that is the same as the fourth direction starting from the normal position (X) for selecting the shift position (S2) for a second additional function.

## Revendications

1. Emetteur de signal pour régler les états de fonctionnement d'un dispositif de changement automatique d'une boîte de vitesses, présentant un dispositif de sélection (1) qui peut dévier dans au moins trois directions et revenant au moins pour certaines positions de changement automatiquement dans une position de base (X), au moyen duquel on peut choisir la au moins une position de changement (R) pour passer une marche arrière, une position de changement (N) pour interrompre la transmission du couple de torsion dans la boîte de vitesses et une position de changement (D) pour passer une marche avant, dans lequel :
le dispositif de sélection (1) peut, pour sélectionner la position de changement (N ; N1, N2) afin d'interrompre la transmission du couple de torsion dans la boîte de vitesses, être dévié de la position de base (X) dans une première direction et le dispositif de sélection (1) peut, pour sélectionner l'une des autres positions de changement (R, D) à partir de la position de changement (N ; N1, N2) afin d'interrompre la transmission du couple de torsion dans la boîte de vitesses, être dévié respectivement dans une autre direction différente de la première direction, qui n'est pas la direction opposée à la première direction, **caractérisé en ce que** le dispositif de sélection (1) est amené de la position de base stable (X) d'abord par déviation dans la première direction dans la position de changement instable (N ; N1, N2) pour interrompre la transmission du couple de torsion dans la boîte de vitesses, puis par déviation dans l'autre direction différente de la première direction dans l'autre position de changement instable (RD).

2. Emetteur de signal selon la revendication 1,
**caractérisé en ce que**
le dispositif de sélection (1) peut, pour sélectionner la position de changement (R) pour passer une marche arrière à partir de la position de changement (N) pour interrompre la transmission du couple de torsion dans la boîte de vitesses, être dévié dans une deuxième direction, qui n'est pas la direction opposée à la première direction et qui est différente de la première direction, et le dispositif de sélection (1) peut, pour sélectionner la position de changement (D) pour passer une marche avant à partir de la position de changement (N) pour interrompre la transmission du couple de torsion dans la boîte de vitesses, être dévié dans une troisième direction, qui est différente des première et deuxième directions et qui n'est pas la direction opposée à la première direction.

3. Emetteur de signal selon la revendication 1 ou 2,
**caractérisé en ce que**
l'émetteur de signal est réalisé de sorte qu'au moyen du dispositif de sélection (1), d'autres dispositifs puissent être commandés en plus pour le réglage des états de fonctionnement du dispositif de changement automatique de la boîte de vitesses.

4. Emetteur de signal selon les revendications 3 et 2,
**caractérisé en ce que**
une position de changement (S1) pour une première fonction supplémentaire et une position de changement (S2) pour une deuxième fonction supplémentaire peuvent encore être sélectionnées au moyen du dispositif de sélection (1), **en ce que** le dispositif de sélection (1) peut, pour sélectionner la position de changement (S1) pour une première fonction supplémentaire à partir de la position de base (X), être dévié dans une direction qui est identique à la deuxième direction et **en ce que** le dispositif de sélection (1) peut, pour sélectionner la position de changement (S2) pour une deuxième fonction supplémentaire à partir de la position de base (X), être dévié dans une direction qui est identique à la troisième direction.

5. Emetteur de signal selon la revendication 1,
**caractérisé en ce que**
il est prévu une première et une deuxième positions de changement (N1, N2) pour interrompre la transmission du couple de torsion dans la boîte de vitesses, le dispositif de sélection (1) peut, pour sélectionner la première ou la deuxième position de changement (N1, N2) pour interrompre la transmission du couple de torsion dans la boîte de vitesses, à partir de la position de base (X), être dévié dans la première ou la deuxième direction, la première direction n'étant pas identique à la deuxième direction, le dispositif de sélection (1) peut, pour sélectionner la position de changement (R) pour passer une marche arrière à partir de la première position de changement (N1) pour interrompre la transmission du couple de torsion dans la boîte de vitesses, être dévié dans une troisième direction qui est différente des première et deuxième directions et qui n'est pas la direction opposée aux première et deuxième directions et le dispositif de sélection (1) peut, pour sélectionner la position de changement (D) pour passer une marche avant à partir de la deuxième position de changement (N2) pour interrompre la transmission du couple de torsion dans la boîte de vitesses, être dévié dans une direction qui est identique à la troisième direction.

6. Emetteur de signal selon l'une quelconque des revendications précédentes,
**caractérisé en ce que**
une position de changement (P) pour appliquer un frein de stationnement peut encore être sélectionnée au moyen du dispositif de sélection (1).

7. Emetteur de signal selon la revendication 6,
**caractérisé en ce que,**
pour sélectionner la position de changement (P) pour appliquer un frein de stationnement, le dispositif de sélection (1) peut, à partir de la position de changement (R) pour passer une marche arrière, être dévié dans une direction qui est identique à la première direction.

8. Emetteur de signal selon les revendications 6 et 5 **caractérisé en ce que,**
pour sélectionner la position de changement (P) pour appliquer un frein de stationnement, le dispositif de sélection (1) peut, à partir de la position de base (X), être dévié dans une direction qui est identique à la troisième direction.

9. Emetteur de signal selon l'une quelconque des revendications précédentes,
**caractérisé en ce que**
le dispositif de sélection (1) peut être dévié dans quatre directions.

10. Emetteur de signal selon les revendications 9 et 2 ou 5,
**caractérisé en ce que,**
pour sélectionner la position de changement (P) pour appliquer un frein de stationnement, le dispositif de sélection (1) peut, à partir de la position de base (X), être dévié dans une quatrième direction qui est différente des première, deuxième et troisième directions.

11. Emetteur de signal selon la revendication 9,
**caractérisé en ce que**
il est prévu une première et une deuxième position de changement (N1, N2) pour interrompre la transmission du couple de torsion dans la boîte de vitesses, le dispositif de sélection (1) peut, pour sélectionner les première et deuxième positions de changement (N1, N2) pour interrompre la transmission du couple de torsion dans la boîte de vitesses, à partir de la position de base (X), être dévié dans une première ou une deuxième direction, la première direction n'étant pas identique à la deuxième direction, le dispositif de sélection (1) peut, pour sélectionner la position de changement (R) pour passer une marche arrière à partir de la première position de changement (N1) pour interrompre la transmission du couple de torsion dans la boîte de vitesses, être dévié dans une troisième direction qui est différente des première et deuxième directions et qui n'est pas la direction opposée aux première et deuxième directions et le dispositif de sélection (1) peut, pour sélectionner la position de changement (D) pour passer une marche avant à partir de la deuxième position de changement (N2) pour interrompre la transmission de couple dans la boîte de vitesses, être dévié dans une quatrième direction qui est différente des première, deuxième et troisième directions et qui n'est pas la direction opposée aux première et deuxième directions.

12. Emetteur de signal selon la revendication 11,
**caractérisé en ce que,**
pour sélectionner la position de changement (P) pour appliquer un frein de stationnement, le dispositif de sélection (1) peut, à partir de la position de changement (R) pour passer une marche arrière, être dévié dans une direction qui est identique à la première ou à la deuxième direction.

13. Emetteur de signal selon la revendication 11,
**caractérisé en ce que**
une position de changement (S1) pour une première fonction supplémentaire et une position de changement (S2) pour une deuxième fonction supplémentaire peuvent encore être sélectionnées au moyen du dispositif de sélection (1) et, pour sélectionner la position de changement (S1) pour une première fonction supplémentaire, le dispositif de sélection (1) peut être dévié de la position de base (X) dans une direction qui est identique à la troisième direction et, pour sélectionner la position de changement (S2) pour une deuxième fonction supplémentaire, le dispositif de sélection (1) peut être dévié de la position de base (X) dans une direction qui est identique à la quatrième direction.

14. Emetteur de signal selon l'une quelconque des revendications précédentes,
**caractérisé en ce que**
l'émetteur de signal présente en outre une touche de stationnement (4) et un frein de stationnement peut être appliqué par pression de la touche de stationnement (4).

15. Emetteur de signal selon la revendication 14,
**caractérisé en ce que**
la touche de stationnement (4) est aménagée sur le dispositif de sélection (1).

16. Emetteur de signal selon l'une quelconque des revendications précédentes,
**caractérisé en ce que**
l'émetteur de signal présente en outre une touche d'arrêt de recul (5) et le dispositif de sélection (1) ne peut, pour sélectionner la position de changement (R) pour passer une marche arrière, être dévié que lorsque la touche d'arrêt de recul (5) est enfoncée.

17. Emetteur de signal selon la revendication 16,
**caractérisé en ce que**
la touche d'arrêt de recul (5) est aménagée sur le dispositif de sélection (1).

18. Emetteur de signal selon l'une quelconque des revendications précédentes,
**caractérisé en ce que**
l'émetteur de signal est monté dans un véhicule.

19. Emetteur de signal selon la revendication 18,
**caractérisé en ce que**
la position de changement (R) pour passer une marche arrière, par rapport à la position de base (X) du dispositif de sélection (1), est aménagée dans la direction de marche avant du véhicule et la position de changement (D) pour passer une marche avant, par rapport à la position de base (X) du dispositif de sélection (1), est aménagée dans la direction de marche arrière du véhicule.

20. Emetteur de signal selon la revendication 18,
**caractérisé en ce que**
la position de changement (R) pour passer une marche arrière, par rapport à la position de base (X) du dispositif de sélection (1), est aménagée dans la direction de marche arrière du véhicule et la position de changement (D) pour passer une marche avant, par rapport à la position de base (X) du dispositif de sélection (1), est aménagée dans la direction de marche avant du véhicule.

21. Emetteur de signal selon l'une quelconque des revendications 18 à 20, **caractérisé en ce que**
la position de changement (R) pour passer une marche arrière et la position de changement (D) pour passer une marche avant sont aménagées en symétrie ponctuelle par rapport à la position de base (X) du dispositif de sélection (1).

22. Emetteur de signal selon l'une quelconque des revendications 18 à 21, **caractérisé en ce que**
le dispositif de sélection (1) se présente sous la forme d'un levier de direction aménagé sur une colonne de direction du véhicule.

23. Emetteur de signal selon l'une quelconque des revendications 18 à à 21,
**caractérisé en ce que**
le dispositif de sélection (1) se présente sous la forme d'un levier de commande aménagé sur une console centrale du véhicule.

24. Emetteur de signal
**caractérisé en ce que**
le dispositif de sélection (1) peut, pour sélectionner la position de changement (N ; N1, N2) pour interrompre la transmission du couple de torsion dans la boîte de vitesses, être dévié de la position de base (X) dans une première direction et le dispositif de sélection (1) peut, pour sélectionner l'une des autres positions de changement (R, D), être dévié de la position de changement (N ; N1, N2) pour interrompre la transmission du couple de torsion dans la boîte de vitesses, d'abord respectivement dans l'autre direction différente de la première direction, qui n'est pas la direction opposée à la première direction, et, après avoir été dévié dans l'autre direction respective, peut être dévié à nouveau dans la première direction.

25. Emetteur de signal selon la revendication 24,
**caractérisé en ce que**
le dispositif de sélection (1) peut, pour sélectionner de la position de changement (R) pour passer une marche arrière, être dévié de la position de changement (N) pour interrompre la transmission du couple de torsion dans le boîte de vitesses dans une deuxième direction, qui n'est pas la direction opposée à la première direction et qui est différente de la première direction et, après avoir été dévié dans la deuxième direction, peut être dévié à nouveau dans la première direction et le dispositif de sélection (1) peut, pour sélectionner la position de changement (D) pour passer une marche avant, être dévié de la position de changement (N) pour interrompre la transmission du couple de torsion dans la boîte de vitesses dans une troisième direction, qui est une direction différente des première et deuxième directions et qui n'est pas la direction opposée à la première direction et, après avoir été dévié dans la troisième direction, peut être dévié à nouveau dans la première direction.

26. Emetteur de signal selon la revendication 24 ou 25,
**caractérisé en ce que**
l'émetteur de signal est réalisé de sorte qu'au moyen du dispositif de sélection (1), d'autres dispositifs puissent être commandés en plus pour le réglage des états de fonctionnement du dispositif de changement automatique de la boîte de vitesses.

27. Emetteur de signal selon les revendications 26 et 25,
**caractérisé en ce que**
une position de changement (S1) pour une première fonction supplémentaire et une position de changement (S2) pour une deuxième fonction supplémentaire peuvent encore être sélectionnées au moyen du dispositif de sélection (1), le dispositif de sélection (1) peut, pour sélectionner la position de changement (S1) pour une première fonction supplémentaire, être dévié de la position de base (X) dans une direction qui est identique à la deuxième direction et le dispositif de sélection (1) peut, pour sélectionner la position de changement (S2) pour une deuxième fonction supplémentaire, être dévié de la position de base (X) dans une direction qui est identique à la troisième direction.

28. Emetteur de signal selon la revendication 24,
**caractérisé en ce que**
il est prévu une première et une deuxième position de changement (N1, N2) pour interrompre la transmission du couple de torsion dans la boîte de vitesses, le dispositif de sélection (1) peut, pour sélectionner les première ou deuxième positions de changement (N1, N2) pour interrompre la transmission du couple de torsion dans la boîte de vitesses, être dévié de la position de base (X) dans la première ou la deuxième direction, la première direction n'étant pas identique à la deuxième direction, le dispositif de sélection (1) peut, pour sélectionner la position de changement (R) pour passer une marche arrière, être d'abord dévié de la première position de changement (N1) pour interrompre la transmission du couple de torsion dans la boîte de vitesses dans une troisième direction qui est différente des première et deuxième directions et qui n'est pas la direction opposée aux première et deuxième directions et, après avoir été dévié dans la troisième direction, peut être dévié à nouveau dans la première ou la deuxième direction et le dispositif de sélection (1) peut, pour sélectionner la position de changement (D) pour passer une marche avant, être d'abord dévié de la deuxième position de changement (N2) pour interrompre la transmission du couple de torsion dans la boîte de vitesses dans une direction qui est identique à la troisième direction et, après avoir été dévié dans la troisième direction, peut être dévié à nouveau dans la première ou la deuxième direction.

29. Emetteur de signal selon l'une quelconque des revendications précédentes 24 à 28,
**caractérisé en ce que**
une position de changement (P) pour appliquer un frein de stationnement peut encore être sélectionnée au moyen du dispositif de sélection (1).

30. Emetteur de signal selon la revendication 29,
**caractérisé en ce que,**
pour sélectionner la position de changement (P) pour appliquer un frein de stationnement, le dispositif de sélection (1) peut être dévié de la position de changement (R) pour passer une marche arrière d'abord dans l'autre direction respective et, après avoir été dévié dans l'autre direction respective, peut être dévié dans une direction qui est identique à la première direction ou à une direction opposée à la première direction.

31. Emetteur de signal selon l'une quelconque des revendications précédentes 24 à 30,
**caractérisé en ce que**
le dispositif de sélection (1) peut être dévié dans quatre directions.

32. Emetteur de signal selon la revendication 31,
**caractérisé en ce que**
il est prévu une première et une deuxième position de changement (N1, N2) pour interrompre la transmission du couple de torsion dans la boîte de vitesses, le dispositif de sélection (1) peut, pour sélectionner la première ou la deuxième position de changement (N1, N2) pour interrompre la transmission du couple de torsion dans la boîte de vitesses, être dévié de la position de base (X) dans la première direction ou dans une deuxième direction, la première direction n'étant pas identique à la deuxième direction, le dispositif de sélection (1) peut, pour sélectionner la position de changement (R) pour passer une marche arrière, être d'abord dévié de la première position de changement (N1) pour interrompre la transmission du couple de torsion dans la boîte de vitesses dans une troisième direction qui est différente des première et deuxième directions et qui n'est pas une direction opposée aux première et deuxième directions et, après avoir été dévié dans la troisième direction, peut être dévié à nouveau dans la première ou la deuxième direction et le dispositif de sélection (1) peut, pour sélectionner la position de changement (D) pour passer une marche avant, être d'abord dévié de la deuxième position de changement (N2) pour interrompre la transmission du couple de torsion dans la boîte de vitesses dans une quatrième direction, qui est différente des première, deuxième et troisième directions et qui n'est pas une direction opposée aux première et deuxième directions, et, après avoir été dévié dans la quatrième direction, peut être dévié à nouveau dans la première ou la deuxième direction.

33. Emetteur de signal selon la revendication 32,
**caractérisé en ce que,**
pour sélectionner la position de changement (P) pour appliquer un frein de stationnement, le dispositif de sélection (1) peut d'abord être dévié de la position de changement (R) pour passer une marche arrière d'abord dans la troisième ou la quatrième direction et, après avoir été dévié dans la troisième ou la quatrième direction, peut être dévié dans une direction qui est identique à la première ou à la deuxième direction.

34. Emetteur de signal selon la revendication 32,
**caractérisé en ce que**
une position de changement (S1) pour une première fonction supplémentaire et une position de changement (S2) pour une deuxième fonction supplémentaire peuvent encore être sélectionnées au moyen du dispositif de sélection (1) et, pour sélectionner la position de changement (S1) pour une première fonction supplémentaire, le dispositif de sélection (1) peut être dévié de la position de base (X) dans une direction qui est identique à la troisième direction et, pour sélectionner la position de changement (S2) pour une deuxième fonction supplémentaire, le dispositif de sélection (1) peut être dévié de la position de base (X) dans une direction qui est identique à la quatrième direction.
